# EUROPEAN PATENT SPECIFICATION

(11) **EP 2 386 047 B1**
(45) Date of publication and mention of the grant of the patent: **12.07.2017**
(21) Application number: 09806237.5
(22) Date of filing: 03.09.2009
(51) Int. Cl.: F24J 2/14, F24J 2/10, F24J 2/06, G02B 26/08

(54) **LIGHTWEIGHT LOW-COST SOLAR CONCENTRATOR**
LEICHTGEWICHTIGER KOSTENGÜNSTIGER SONNENKONZENTRATOR
CONCENTRATEUR SOLAIRE A BAS COUT ET LEGER

(30) Priority: 12.08.2008 AU 2008904118
(43) Date of publication of application: 16.11.2011
(73) Proprietor: Sattler AG, 8077 Gössendorf (AT)
(72) Inventor: Hahn, Harry Kurt, 76275 Ettlingen (DE)
(74) Representative: Wacker, Jost Oliver
(86) International application number: PCT/AU2009/001042
(87) International publication number: WO 2010/017594

(56) References cited:
- EP-A2- 0 025 834
- WO-A2-2008/037108
- DE-U1- 20 201 842
- FR-A1- 2 300 913
- US-A- 3 326 624
- US-A- 3 977 773
- US-A- 4 432 342
- US-A- 4 672 389
- US-A- 4 672 389
- US-A- 5 104 211

## Description

The present invention in particular relates to an inflatable mirror for concentrating electromagnetic radiation such as radiation from the sun. The inflatable or light concentrating mirror in accordance with the invention comprises two sheets, one of the two sheets being transparent and the other sheet being reflective. The two sheets are connected or sealed to each other to define a chamber therebetween which may be inflated with air or gas to form the inflated mirror.

EP 0 025 834 A2 describes a sun collector with a parabolic reflector element. The reflector element is formed by a reflecting membrane which encloses together with a light-transmissive membrane a chamber in which an overpressure is generated. The light-transmissive membrane comprises a support-web which enables the light-transmissive membrane to be less curved than the reflective membrane. Inside of the chamber a temperature sensor is positioned which is connected with a control device and means for changing the pressure inside of the chamber.

WO 2008/037108 A2 describes a collector with a pressure cell being formed by flexible membranes and one reflector being placed inside of the pressure cell. The reflector is formed by a flexible membrane too and defining a first pressure chamber and a second pressure chamber inside of the pressure cell. The form of the reflector depends on a differential pressure between both pressure chambers. Furthermore the collector provides means for keeping up a certain differential pressure between said pressure chambers. By this a certain position of the reflector can be provided even when the pressure chambers are deformed for example by wind pressure.

US 4,672,389 A describes an inflatable collector assembly being used as an antenna in the first line. The collector comprises two membranes building a chamber with one membrane being transparent and the other one being reflective. A fan or pump is provided to bring the reflective membrane into a parabolic form.

FR 2 300 913 A1 describes a sun collector in the form of a balloon. A part of said balloon forms a reflector which is directed to a receiver inside of the balloon.

FIG. 1a and b :
Preferably each sheet has an outer periphery or rim with the outer periphery or rims being connected or sealed to each other so as to define the gasproof chamber therebetween. Here the two sheets may be connected and sealed to each other by a welding process, with an adhesive tape, with one or more detachable connections ( e.g. by using of gasproof clamp elements or gasproof hook-and-loop fasteners etc.), or by a combination of these means.

One sheet is transparent 1 or almost transparent for a defined range of electromagnetic radiation and the other sheet 2 has essentially a reflecting mirror-like surface, in order to achieve an almost total reflection of a defined range of electromagnetic radiation (e.g. sunlight). The reflecting surface may be on the inside or outside of the other sheet to receive electromagnetic radiation through the transparent sheet and reflect the received radiation.

The two connected sheets are fixed to a rigid support, or envelope a rigid support, such as a rigid support frame 6, which defines the outline or outer periphery of the inflatable mirror and provides stability. This rigid support or rigid support frame 6 may then be fixed to a mirror support structure 7.

For a defined adjustment of the pressure in the air or gas, which is enclosed in the chamber between the two sheets 1 and 2 of the inflatable mirror, means may be provided for inflating or deflating the mirror 4. For this purpose at least one of the two sheets may have one or more in- and outlet(s) for inflation and deflation of the chamber. By adjusting a defined overpressure in the air or gas, which is enclosed in the chamber 5 in the inflatable mirror, a concave mirror with a defined mirror curvature is created. Here the mirror curvature basically depends on the air-pressure or gas-pressure inside of the chamber **5** of the inflatable mirror, on the resulting radial forces created by the rigid support frame **6,** and on the elasticity of the two sheets **1** and **2** of the inflatable mirror.
The curvature of this pressure-adjustable mirror allows a controlled focused reflection of electromagnetic radiation **8.** To achieve an optimum curvature of the sheet **2** with the reflecting mirror-like surface, a foil-like material with a defined elasticity may be used for this sheet. This material may be a metal-coated polymeric material.
For the transparent sheet **1,** a polymeric material with a good transparency and a defined elasticity and UV-resistance is used. For the sheet with the reflecting mirror-like surface **2** a substantially UV-resistant polymer material with a defined elasticity is used. The two sheets of the inflatable mirror may be connected and sealed to each other by a defined plastic welding process (e.g. like high-frequency welding, ultrasonic welding etc. ), or simply with an adhesive tape.
The material which is used for the sheets **1** and **2** of the inflatable mirror may additionally be reinforced with fibres (e.g. glassfibres ), which are arranged (e.g. stuck on or embedded in the material) in a mesh-like manner inside or outside of the material, to allow for larger spans.

To make use of the electromagnetic radiation, which is reflected and concentrated by the inflatable mirror, a receiver for concentrated electromagnetic radiation **10** is used in combination with the inflatable mirror. This receiver **10** is arranged in the focal-point or in the focal-line of the inflatable mirror.
Here the receiver **10** may comprise a device for the absorption and the transformation of electromagnetic radiation either into electric energy, thermal energy or into chemical energy.

The combination of the inflatable mirror and the receiver may include a receiver support structure for supporting the receiver for the concentrated electromagnetic radiation on or to the support of the inflatable mirror or in area surrounding the inflatable mirror.

FIG.2 :
The mentioned receiver **10** for the concentrated electromagnetic radiation may be fixed with a rigid receiver support structure **9** on the support frame **6** of the inflatable mirror, in such a way, that the receiver is located in the focal point or in the focal line of the inflatable mirror. In order to protect the receiver from hail damage and rain or the like, a rgid protective cover may be fixed on the topside of the receiver, which may be detachable fixed to the receiver support struture, in such a way, that it can be easily detached and attachedin a quick manner, in order to excange the receiver in a short time.

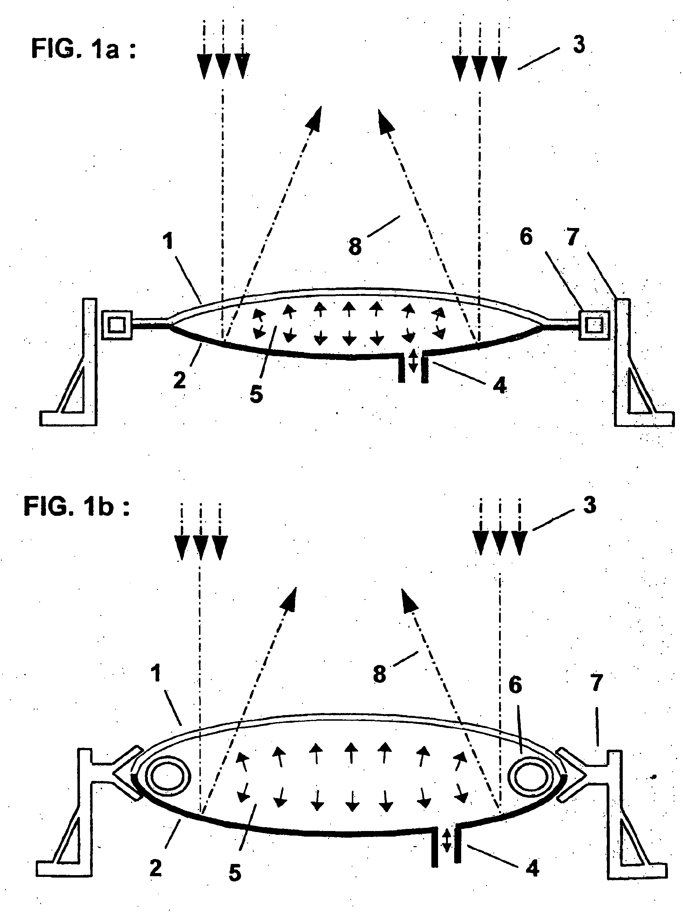

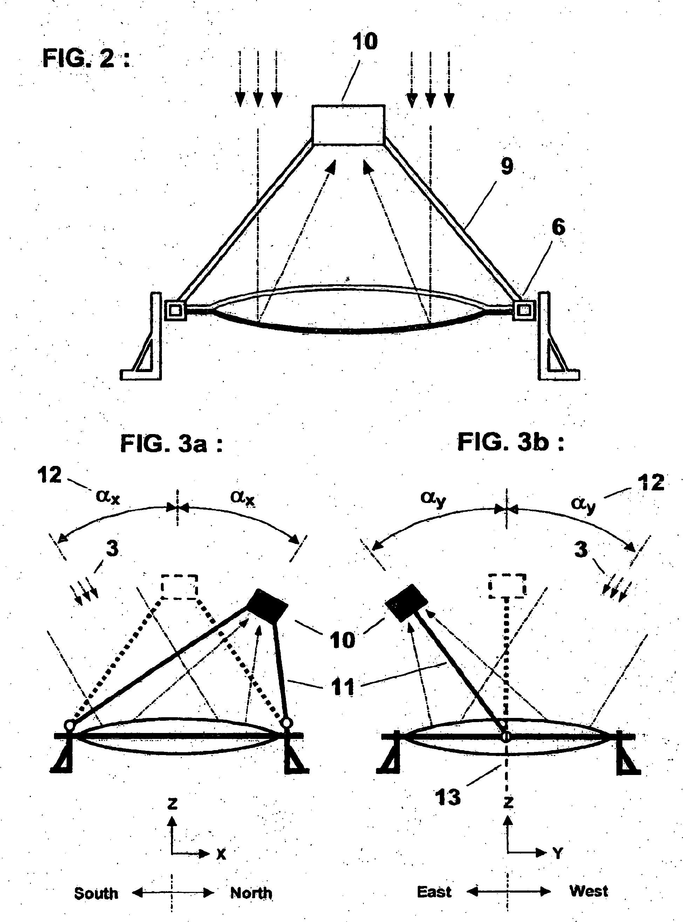

FIGS.3a and b :
Alternatively the receiver **10** may be fixed with the help of an adjustable receiver support structure **11,** either on the support frame **6,** on the support structure **7,** or in the surrounding area of the inflatable mirror, in such a way, that it can follow the path of the focal-point or focal-line of the inflatable mirror in a defined angle range, if the inflatable mirror for example has reached the limit of its pivoting range, or if it is constantly fixed or resting in reference to the ground, and the angle of incidence of the incoming (parallel) electromagnetic radiation **12** (sunlight) is changing in reference to the optical axis or the optical plane **13** of the inflatable mirror. To protect the receiver from hail damage and rain etc., again a protective cover may be fixed on the topside of the receiver (as described for the rigid receiver support structure (Fig. 2).

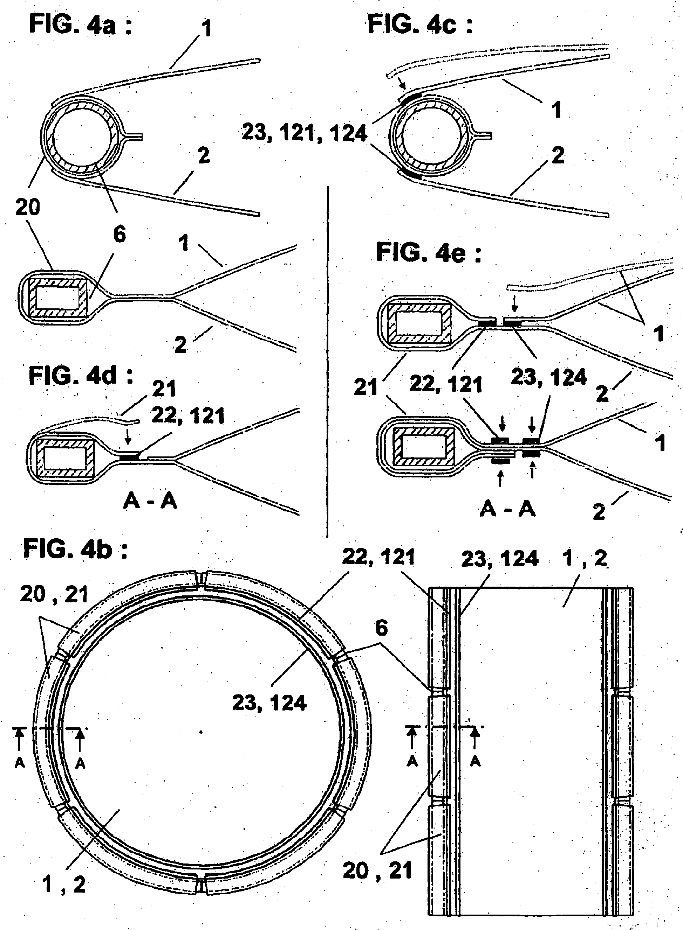

The fixing of the periphery of the two gasproof connected sheets of the inflatable mirror to the rigid support frame **6** may be made in such a way, that it can be easy detached **121.**
For this one of the following design variants, as shown in Figure **4****,** may be used :
FIGS. 4a and b :
   An easy detachable fixing of the inflatable mirror on the rigid support frame **6** may be achieved by flap-like extensions or additions on one or both sheets **1** and **2** of the inflatable mirror, which are formed into loops **20.** These loops **20,** which are used to fix the inflatable mirror to the support frame **6,** are located on defined positions along the circumference of the inflatable mirror. They may be made of the same material as the sheets of the inflatable mirror, or they may be made of a different material.
      Here the used material may additionally be reinforced with fibres (e.g. glassfibres), which are arranged in a mesh-like manner inside or outside of the material.
FIGS. 4d and e :
   The described loops **20,** may be made in such a way, that they can be opened and closed as at **21** with the help of special lock-elements **22,** which allow to attach or detach the inflatable mirror on the support frame, without having to disassemble the support frame **6.** The used lock-elements **22,** which can be opened and closed, may be clamping elements or hook-and-loop fasteners (e.g. Vecro-Fasteners) or the like, or a combination of such elements.
FIGS. 4b, c and e :
   To allow for a quick exchange of one or both sheets of the inflatable mirror, the gasproof connection between the two sheets of the inflatable mirror may comprise either one or two detachable connections **124,** which may be made of gasproof clamping elements or gasproof hook-and-loop fasteners **23** (e.g. Vecro-Fasteners) etc.. Here an additional seal may be included in these fasteners or clamp elements, in order to achieve the gasproof connection.
      The rigid support frame **6** of the inflatable mirror may be carried out as an external or as an internal support frame. An external support frame means that the frame which supports the mirror is located outside of the gasproof chamber of the inflatable mirror. An internal support frame means that the frame which supports the mirror is located inside of the gasproof chamber of the inflatable mirror.

The rigid support frame **6** of the inflatable mirror may have a circular outline or a polygon-like outline which approximates a circle, whereby a concave dish-like mirror with a circular or almost circular outline and a point-like circular focal area is created. Alternatively the inflatable mirror may have an elliptical outline or a polygon-like outline which approximates an ellipse, whereby a concave dish-like mirror with an elliptical or almost elliptical outline and a point-like elliptical focal area is created.
Or the rigid support frame **6** of the inflatable mirror may have a longish or elongated rectangular outline, whereby a concave trough-like mirror with a rectangular outline and a line-like focal area is created.

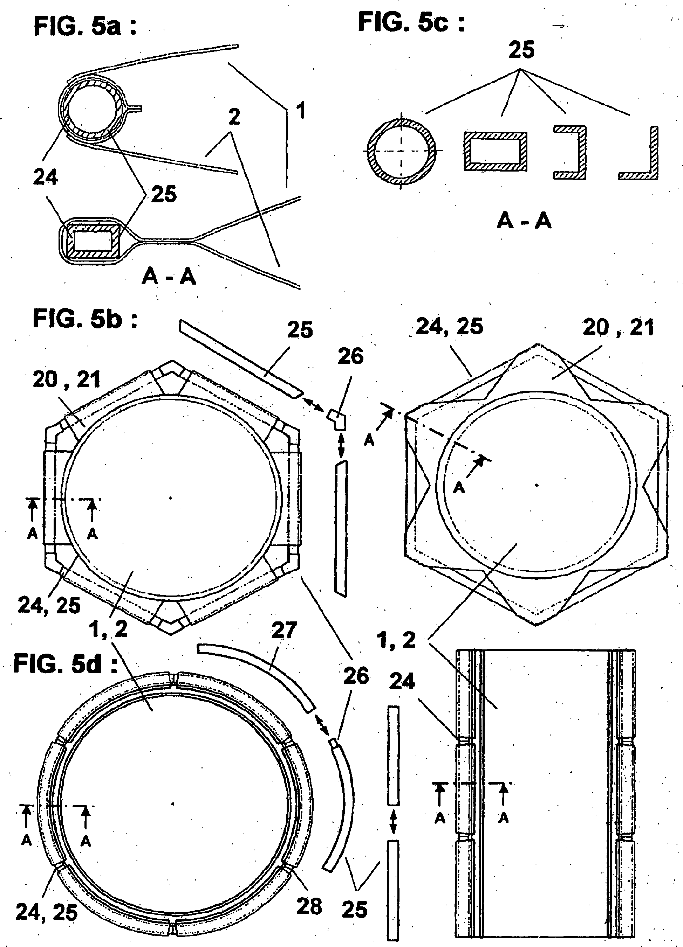

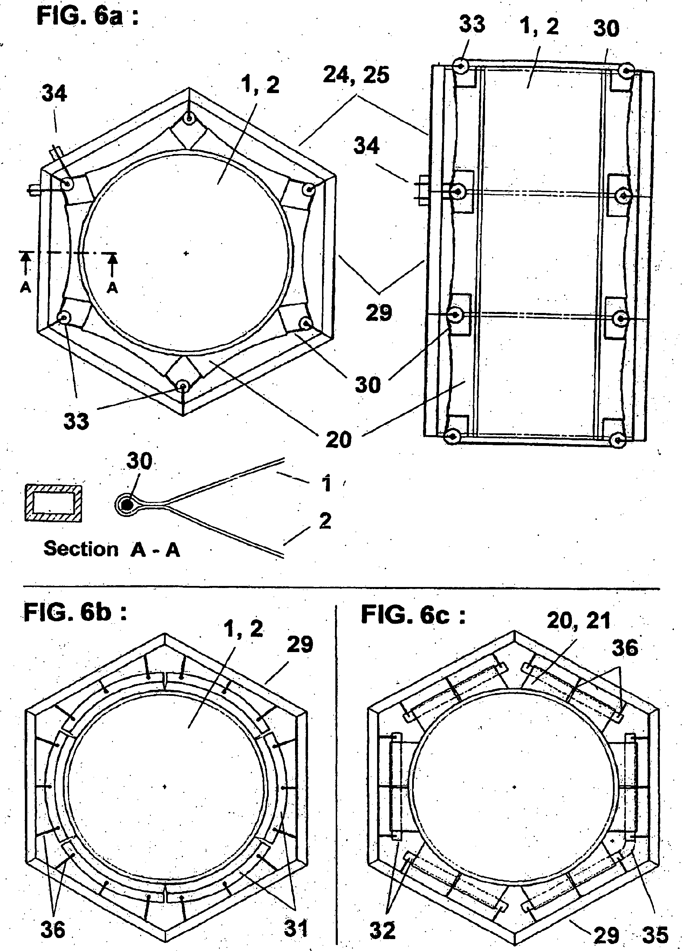

In the following some possible design variants for an external support frame **24** are described : These design variants are shown in Figures 5 and 6 :
In FIGS. 5a to c, the external support frame **24** may be made of frame elements **25,** which are made of standard merchant material (standard merchant bar) with a tube-like, angle-like or channel-like crossection or it may be made of special manufactured elements. The material used for the frame elements may be steel, aluminium alloy, a fibre reinforced polymer or plastic. Here the frame elements may be joined with the help of connecting elements **26.**
FIG. 5d :
   In a special design variant, the frame elements may have the form of ring segments **27,** which, when joined together, form a support frame with the shape of a closed ring **28.**
FIGS. 6a to 6c :
   In another possible design variant where the external support frame **24** may be made of an inner frame and an outer frame. Here are different sub variants possible :
For example in FIG. 6a :
   In the first such sub variant, the inner frame is made of a tensioned rope or line **30** such as a cable and the outer frame **29** is made of frame elements **25,** which are made of standard merchant material with a tube-like, angle-like or channel-like crossection
      (as described in figure 5).
      The tensioned rope **30** is supported on a defined number of points by pulleys or slide elements 33, which are fixed to the outer frame **29,** in such a way, that the tensioned rope forms an almost polygon-shaped frame, where the inflatable mirror is fixed on. This design of the support frame can additionally include one or more devices to adjust the tension in the rope **34.**
FIG. 6b and c :
   In another sub variant, the inner support frame is made of ring-segments or bars 31, to which the inflatable mirror is fixed on in an easy detachable way, for example with the help of loops (FIG. 6c.) as described before (in figure 4a and 4b), or in a way where the ring-segments or bars **31** act as clamp-elements (FIG. 6b.), which clamp together the two sheets of the inflatable mirror in a gasproof manner and which fix them at the same time. The inner support frame in this embodiment is fixed to the outer support frame on defined points, with the help of fixing ropes **36** or line, which can be tensioned individually or in groups, in order to achieve the optimal tension and curvature in the sheet **2** with the reflecting surface , when the air or gas which is enclosed in the inflatable mirror, is adjusted to a defined pressure.

There are either no connecting elements used between the clamp-elements, ring-segments or bars, or there are flexible connecting elements **35** are used between these items, in order to allow for a diameter increase of a closed inner support frame.

In the following some possible design variants of an internal support frame **37** for the inflatable mirror are described.

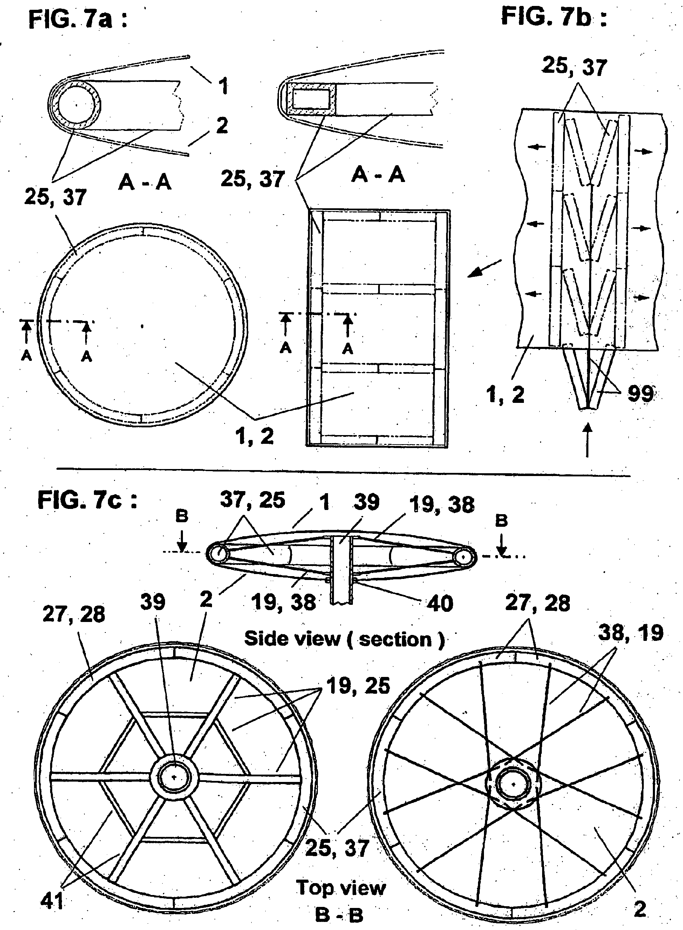

An internal support frame means that the frame which supports the mirror is located inside of the gasproof chamber of the inflatable mirror. (This is shown in figure 7 :)

FIG. 7a :
A support frame, which is carried out as internal support frame **37,** may either have a circular outline, an elliptical outline, or a polygon-like outline which approximates a circle or an ellipse, or a longish or elongated rectangular outline. The internal support frame **37** may be made of the same kind of frame elements which are made from standard merchant material (standard merchant bar), as described for the external support frame.

An internal support frame **37** with a longish rectangular outline may comprise a number of cross bars which are fixed between the two long members of the rectangular support frame (see Fig. 7a), in order to define the distance between the long members and in order to reinforce the rectanglar support frame and provide stability. The mentioned cross bars are supporting members, which prevent deformation of the rectangular frame caused through inwards acting forces on the two connected sheets of the inflatable mirror, which are caused through the overpressure in the air or gas enclosed in the inflatable mirror. The cross bars may be mounted on the rectangular support frame in such a way, that the distance between the long members of the upport frame can be adjusted during the assembly, or the length of the cross bars may be adjustable during the assembly, in order to adjust the frame width precisely.

FIG. 7b :
In order to make the assembly of the internal support frame easier, the internal support frame **37** may be a folding frame **99,** which is adapted to be inserted into the inflatable mirror in a folded state and unfolded and assembled through an opening in the inflatable mirror. (This is shown with the help of an exemplary sketch on the righthand side of FIG.7a.).The folding mechanism of the folding frame may be adapted to be actuated by a push-in a bar or by pulling-out a line or a bar, which is fixed on the folding frame
   For example the internal support frame of a rectangular frame may have an integrated folding mechanism, which allows the internal support frame to unfold inside of the mirror. This folding mechanism may be actuated for example by push-in a bar along the centre line of the folded frame, or by pulling-out a rope from the centre of the folded frame (not shown). A similar principle of a folding mechanism may also be used for an internal support frame of an inflatable mirror with a circular outline (not shown).

A support frame or folding frame with a rectangular outline may additionally comprise a rigid bow-shaped element on or near each of its short sides, in order to predefine the intended curvature of the sheet with the reflecting surface in the areas which are close to the short sides of the rectangular support frame (not shown).
Here the bow-shaped element is fixed with its two endpoints either to the two long members of the rectangular support frame, close to the short sides of the rectangular support frame, or to the two corners (or corner members) on the short side of the rectangular support frame. This bow-shaped element may either be permantly fixed or detachable fixed on the support frame, or it may be tiltable fixed around an axis which passes essentially through its endpoints and which is orientated perpendicular to the optical plane of the trough-like mirror in order to allow a tilting of the bow-shaped element for an easy assembly, in such a way, that the bow plane matches the main plane of the support frame during assembly. (e.g. for an easy assembly of the support frame through an opening on the short sides of the two connected sheets of the inflatable mirror). In the final assembled state of the bow-shaped element the mentioned bow plane is orientated perpendicular to the main plane of the support frame and the optical plane, and the bow-shaped edge of the bow-shaped element is orientated towards the sheet with the reflecting surface **2,** in order to predefine its curvature.

FIG. 7c:
Where the inflatable mirror has a circular outline, or an almost circular outline (e.g. a polygonal outline which approximates a circular outline) it may additional comprise a central column **39,** with a preferably tube-like cross section, which is arranged in such a way, that it matches the optical axis **13** of the inflatable mirror.

The central column **39** may be connected to the support frame of the inflatable mirror by a framework of spokes or braces **41,** which may either be made of standard merchant bar with a tube-like, angle-like or channel-like crossection, or which may be made of rope or line **38,** or which may be made of a combination of bar and rope or line.
The central column **39** may penetrate the sheet **2** with the reflecting surface in a gasproof manner, with the help of a seal **40,** in order to provide an external central fixing element for the internal support structure.

The described inflatable mirror, which either has an internal support frame **37** or an external support frame **24,** is then fixed to a mirror support structure **7,** which may be carried out in accordance with one of the following decribed design variants :

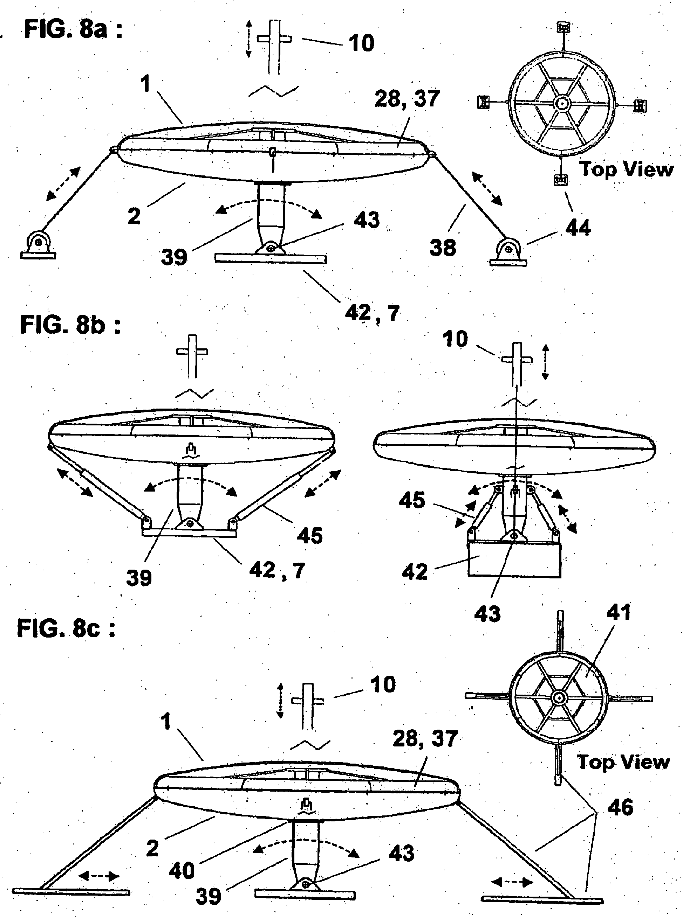

FIGS. 8 a to c :
   A possible mirror support structure for an inflatable mirror with an internal support frame **37** may consist of a solid base or pedestal on the ground **42,** where the central column **39** is fixed on with the help of a spherical joint or a cardan joint **43,** in such a way, that the inflatable mirror can be tilted in a defined angle range in a north-south-direction, as well as in an east-west-direction around a central point.

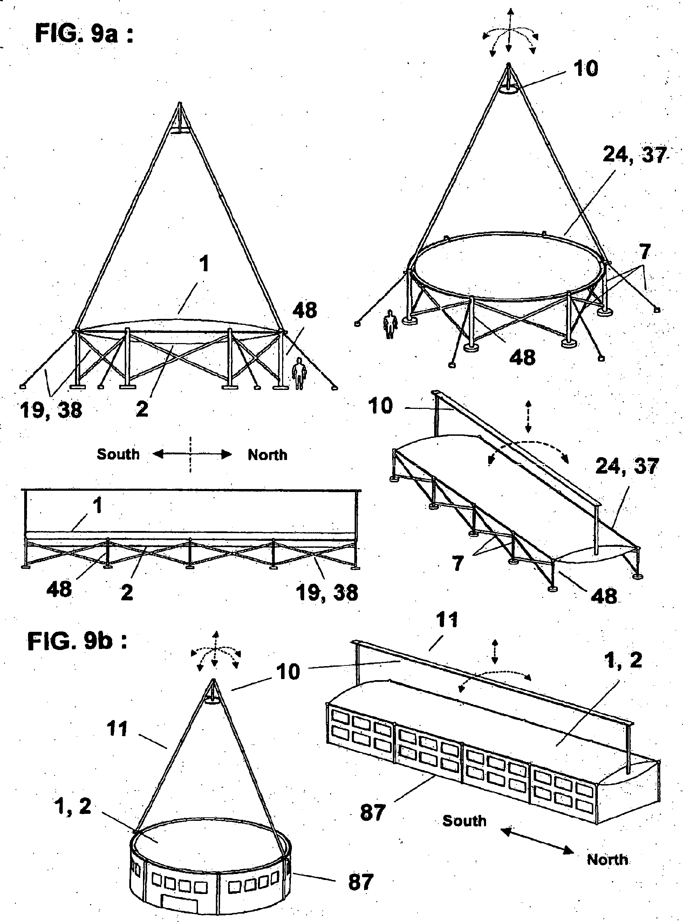

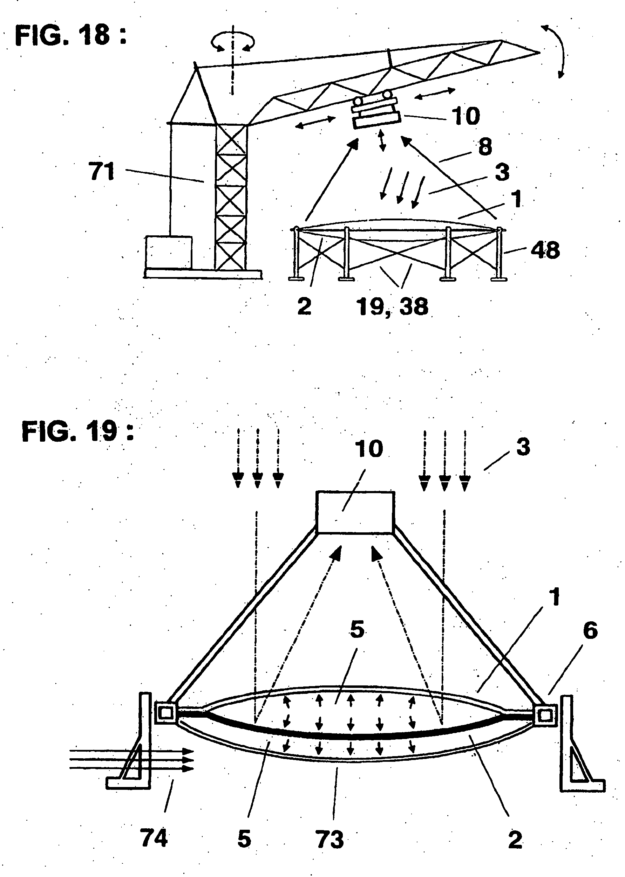

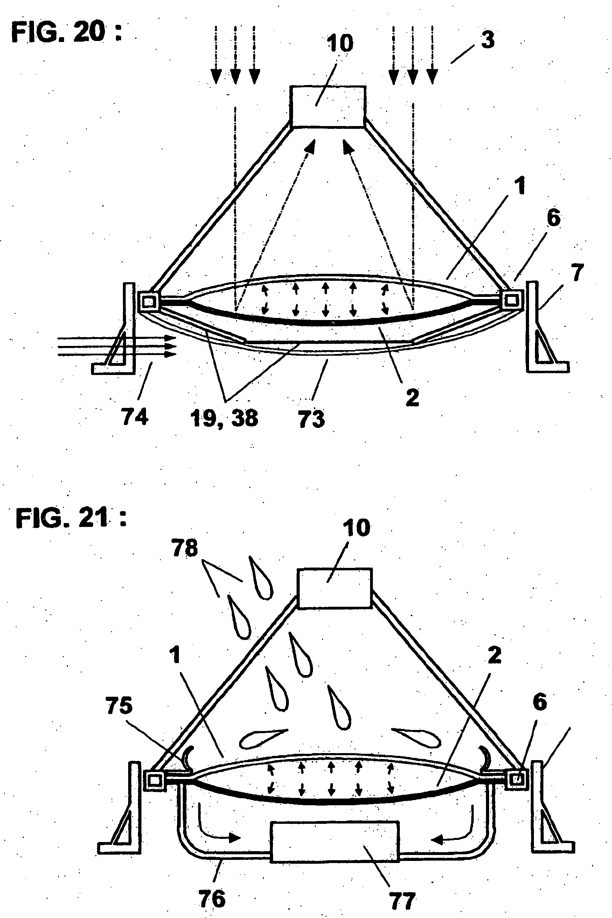

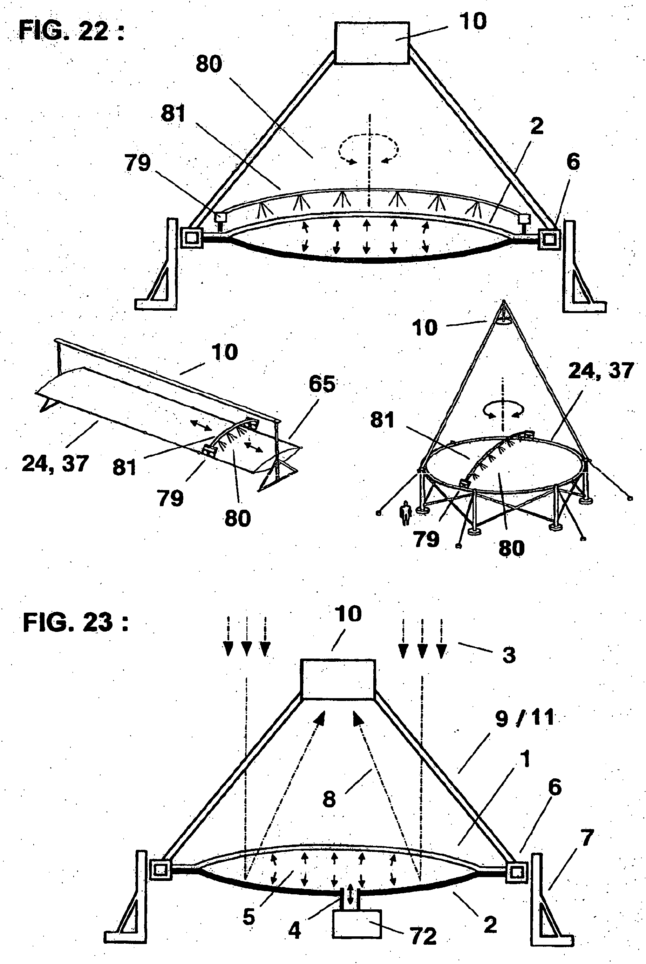

In order to compensate earth's rotation and the change in the declination of earth's axis over the year, the described mirror support structure for the internal support frame **37** may include one of the following drive system variants :
FIG. 8a :
   In the first design variant the mentioned drive system may comprise a defined number of automatic winches **44** and ropes or lines. Here the ropes or lines **38** are fixed on defined points on the support frame of the inflatable mirror. And by adjusting the lengths of these ropes or lines in a controlled manner, with the automatic winches **44,** the inflatable mirror can be tilted with a defined angular velocity either in an east-west-direction or in an north-south-direction around a central point.
      Here the automatic winches **44** may either be fixed on the solid base or pedestal of the inflatable mirror or on defined points on the ground. The drive system responsible for the movement in the north-south-direction, which is only rarely used (e.g. in a sun-tracking application), can alternatively be a simple manual winch system.
FIG. 8b and c :
   In another design variation the mentioned drive system may consist of two or four rigid bar-like elements, which are orientated in an east-west- and north-south direction, and which are either fixed with the first end on the support frame of the inflatable mirror or on its central column, and which are fixed with the other end on the solid base or pedestal of the mirror support structure, or on defined points on the ground. Here either the length of these rigid bar-like elements can automatically be adjusted in a telescopic-like manner (as shown at **45**), or the second end-point of the rigid bar-like element can be moved automatically, by a driven cart-like or sledge-like element, which is fixed to a rail on the ground **46,** in order to tilt the inflatable mirror.
FIG. 8b : (without item 45)
   Another drive system variant may consist of two rotary drives, which are integrated in a cardan joint **43** which is used to fix the central column **39** of the internal support frame **37** to the solid base or pedestal on the ground **42.**
FIG. 9a :
   Another possible mirror support structure **7** for an internal support frame **37** or an external support frame **24** may consist of simple support columns **48,** which are fixed with their top end to the support frame of the inflatable mirror, and which are fixed with their bottom end to a foundation on the ground. Here the support frame of the inflatable mirror is permanently fixed in such a way, that it either has a defined parallel distance to the ground, or that it has a defined inclination towards the ground, in the north-south direction. If the support frame has a rectangular outline, then the long axis of the rectangular support frame is orientated in the north-south direction also.
   In order to exchange the tranparent sheet and the sheet with the reflecting surface in an easy way, the support frame of the inflatable mirror may be detachable fixed on the top of the support columns in such a way, that it can be easy lowered to the ground (e.g.
   with the help of a winch system, with a number of pulley blocks, guide rails etc.) The mentioned support columns **48** may be braced with ropes or lines **38** or struts **19,** in order to provide additional reinforcement between the support columns, or between the support columns and the support frame of the inflatable mirror, or between the support colums and the ground. The receiver for the concentrated electromagnetic radiation **10** may be fixed with an adjustable receiver support structure **11** (as described in FIG 3 or FIG 15 to 18 referred to further below).
FIG. 9b :
   The above described mirror support structure **7,** the internal- or the external-support frame (**37** or **24**) and the inflatable mirror with an adjustable receiver support structure, (as described exemplary in FIG. 9a) may form the basic structure of a building **87** (e.g. an industrial building, residential building, warehouse, garage etc.). In this way an interesting additional use of the inflatable mirror, the described mirror support structure **7** and the adjustable receiver support structure can be created, under the condition that the inflatable mirror and its support structure is large enough for this additional use.

The design variants described in FIG. 9a/b are escpecially suitable for equatorial areas.

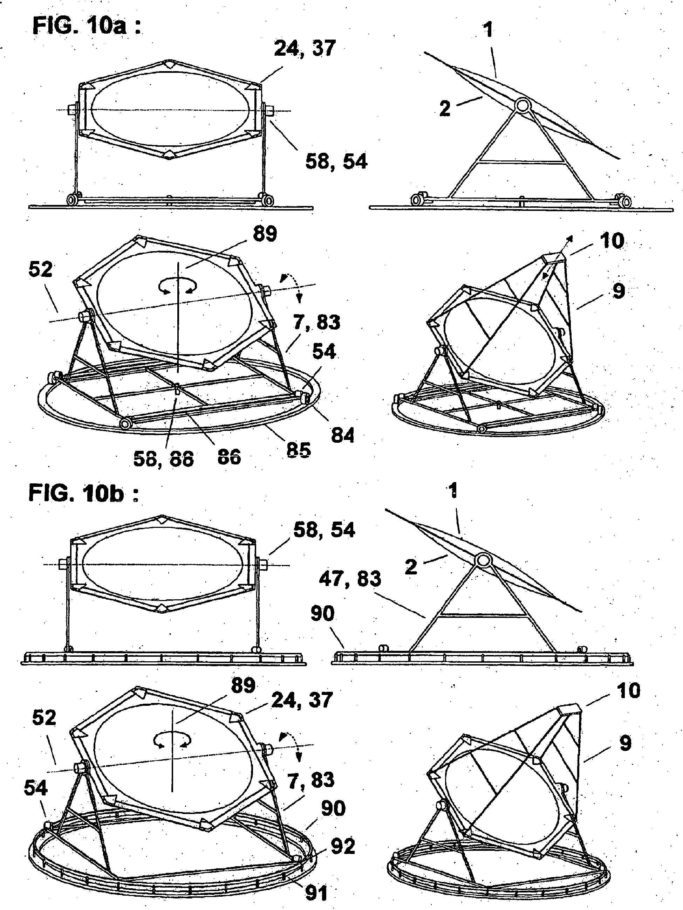

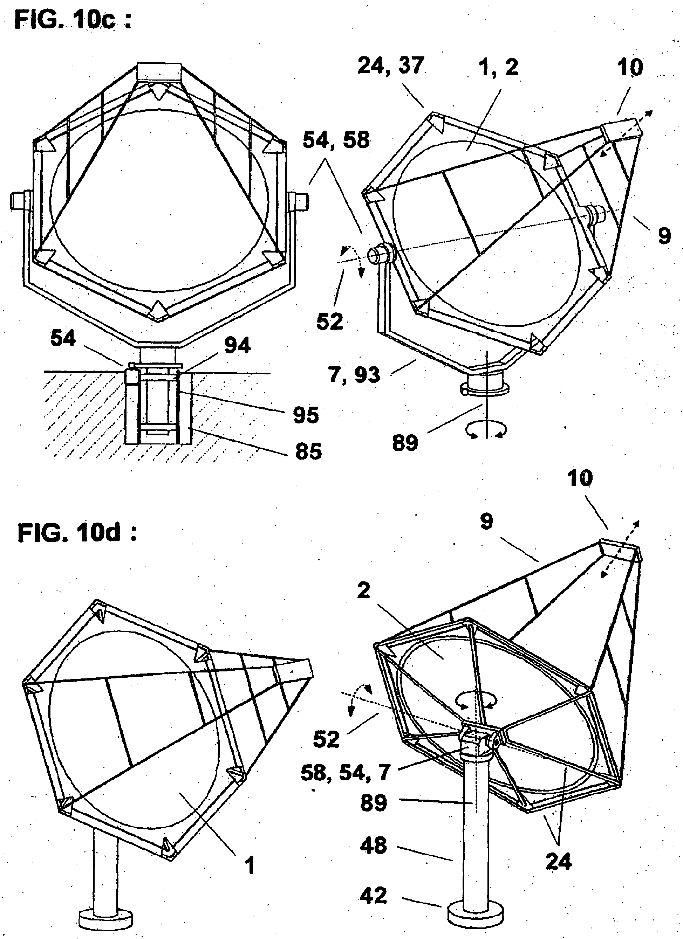

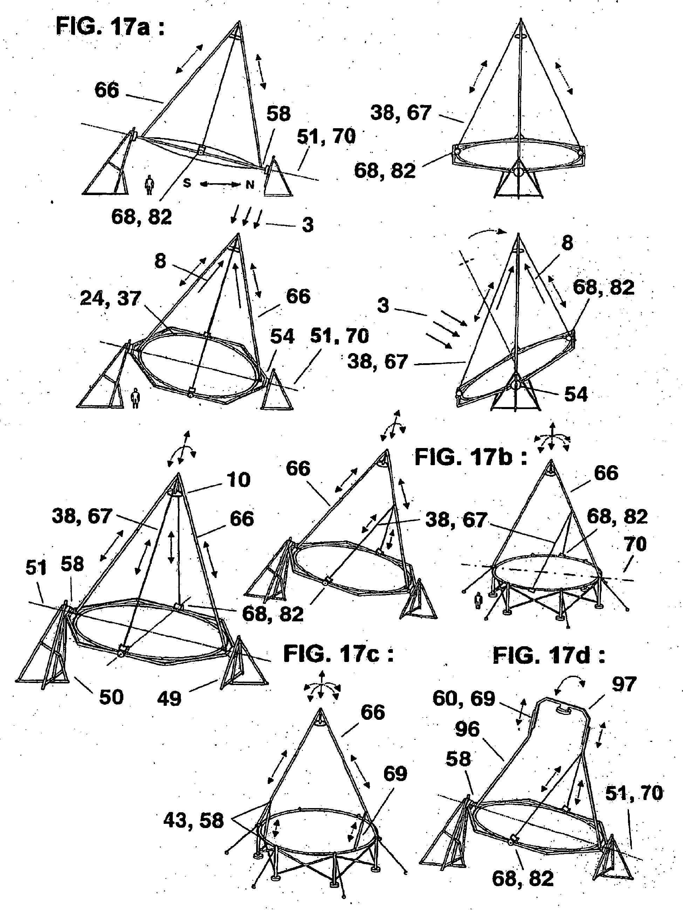

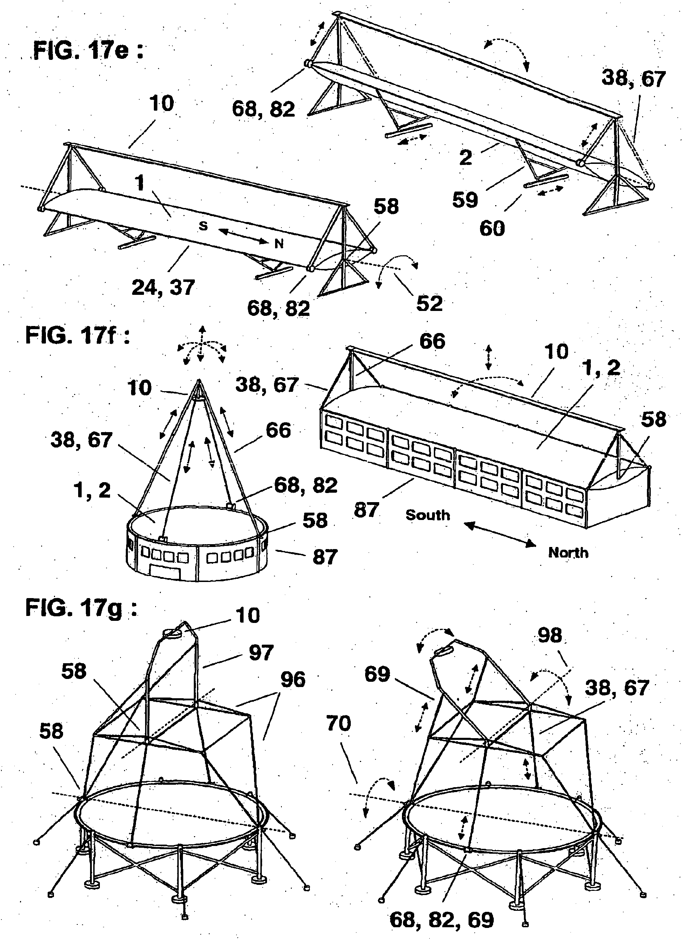

FIG. 10a and b :
Another alternative mirror support structure **7** for an internal support frame **37** or an external support frame **24** may consist of a U-shaped framework **83** made of simple frame elements **25** (e.g. standard merchant material with a tube-like, angle-like or channel-like crossection), which can be rotated around a vertical rotary axis **89 ,** which is going through the centre of its base side.
Here the base side of this U-shaped framework **83** may either rest on wheels **84** which run on a ring-shaped foundation or pedestal **85** (see FIG.10a), or it may rest on pinions or sprockets **92** or on a combination of sprockets and bearings, which run on a circular rail made of ring segments **90,** which may have a built-in circular rack or notch pattern or which may comprise a drive chain which may be fully wound around the circular rail and fixed to the circular rail with its ends. (see FIG.10b).
The vertical rotary axis **89** of the U-shaped framework **83** matches the centre point of the ring-shaped foundation **85** or the centre point of the circular rail **90** respectively.
The design version, where the U-shaped framework **83** rests on wheels **84** may additionally include a central pivot **88,** which is anchored to a post on the ground and which acts as a central bearing for the framework. This central pivot may include a rotary sensor for the recognition of the horizontal angle position of the framework **83.**
In order to keep the wheels of the framework steady on the ground, weights **86** made of concrete, stone, sand, soil etc. may be arraged on defined positions on the framework. The U-shaped framework **83** can be rotated around its vertical rotary axis **89** with the help of preferably two or four rotary drives **54,** which drive two or four of the wheels **84** or pinions or sprockets **92** on which the U-shaped framework rests on .
The internal- or external support frame of the inflatable mirror is fixed to the U-shaped framework **83** with two rotary joints **58,** which are located on the two upward-pointing sides of the U-shaped framework, in such a way, that the support frame of the inflatable mirror can be rotated around a horizontal rotary axis **52.** The support frame of the inflatable mirror can be rotated around this horizontal axis with the help of preferably two rotary drives **54,** which are located on the two rotary joints **58.** These rotary joints may include rotary sensors for the recognition of the vertical position angle of the support frame.
In order to track a moving source of electromagnetic radiation (e.g. the sun), the rotary drives **54** for the rotation of the U-shaped framework around its vertical rotary axis 89 and the rotary drives for the rotation of the support frame of the inflatable mirror around its horizontal rotary axis **52** must be operated simultaneously. In a sun-tracking application the operation of the rotary drives may be either continuous or gradual spread over the daytime. The receiver **10** may be fixed to the support frame of the inflatable mirror either with a fixed receiver support structure or with an adjustable receiver support structure as described further below (in FIG 3 and FIG 17). Here the receiver **10** may be fixed on the receiver support structure in such a way, that its distance to the inflatable mirror can automatically be readjusted in a defined range with a built-in linear drive system, in order to focus the receiver.

FIG. 10c :
Another possible mirror support structure **7** for an external- for internal support frame of an inflatable mirror (as described in FIG.10a and b). , which is very similar to the previous described design variant, is described in the following :
   The essential difference to the above described mirror support structure is the replacement of the U-shaped framework with a U-shaped fork mount **93,** which may be made of standard merchant material with a tube-like crossection.
   This fork mount **93** has a central journal located in the centre of its base side, which is rotatable fixed to one or more bearings **94,** which are mounted inside of a rigid column (or bearing casing etc.). This rigid column may favourably be made of steel pipe **95,** which may be simply cast into a foundation made of concrete **85,** which itself may be cast into a large drill hole in the ground. Alternatively this rigid column (or bearing casing) may just be fixed to a concrete foundation on the ground.
   The described fork mount **93** can be rotated around its vertical rotary axis **89** with the help of an automatic rotary drive **54,** which is favourable mounted to the foundation **85** on the ground. The support frame of the inflatable mirror can be rotated around its horizontal axis **52** in the same way as described in the previous design variant (in FIG.10a and b), with the help of preferably two rotary drives **54,** which are located on two rotary joints **58,** which are fixed to the upper ends of the U-shaped fork mount **93.** The receiver **10** may be fixed as described in the previous design variant (shown in FIG. 10a and b).

FIG. 10d :
Another possible mirror support structure **7,** where the external support frame of an inflatable mirror can be rotated around a vertical and a horizontal axis, similar as described for the previous two mirror support structure variants (FIG. 10a to 10c), is described in the following :
   In this design variant the external support frame **24** of an inflatable mirror may be fixed to two rigid rotary joints **58,** which are fixed on the top end of a rigid column **48,** which then may be mounted on a soild base or pedestal **42** on the ground. Here the two rigid rotary joints **58** are fixed in such a way on the top of the column **48,** and on the centre of the external support frame, and connected to each other, that the rotary axis of one rotary joint is orientated vertical and the rotary axis of the other rotary joint is orientated horizontal.
   In this way the external support frame **24** of the inflatable mirror can be rotated around a vertical rotary axis **89** and a horizontal axis **52.** The roatition may be done with the help of two automatic rotary drives **54,** which may be integrated in the two rotary joints **58.** The receiver **10** may be fixed in the same way as described in the two previous design variants (FIG. 10a/b).

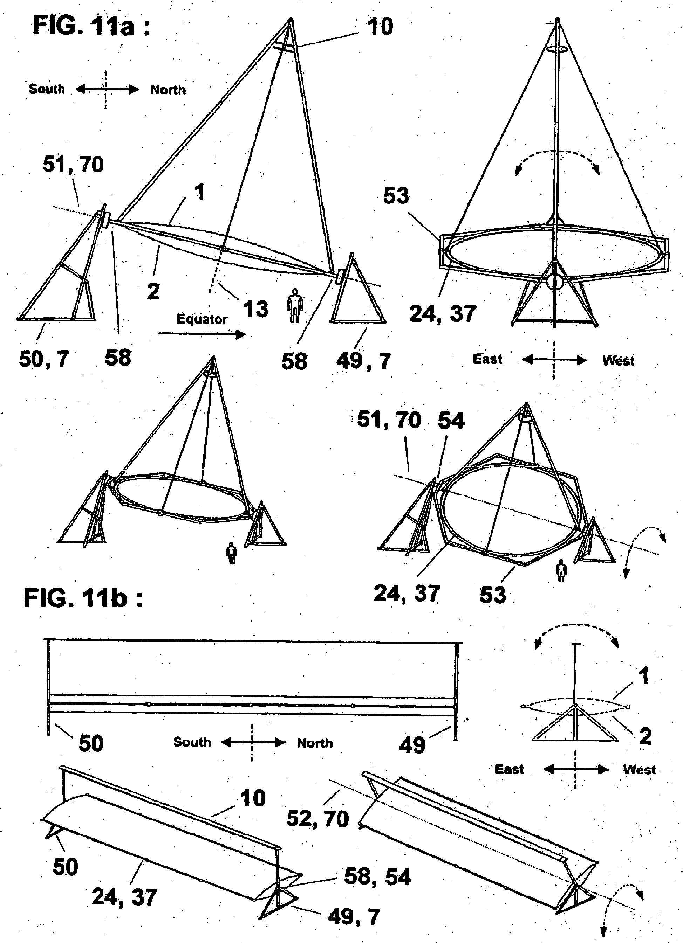

FIGS. 11a and b :
Another mirror support structure **7,** which may be used for an external- or internal-support frame (**24** or **37)** of the inflatable mirror, may consist of two separate units.
The first unit, or "southern unit" **50** may be located on the southern end of the inflatable mirror, and the second unit or "northern unit" **49** may be located on the northern end of the inflatable mirror. The inflatable mirror may be fixed to the northern- and southern unit of the support structure with two rotary joints **58,** in such a way, that it can be tilted around a rotary axis, which runs in a north-south direction and which is also perpendicular to the optical axis **13** of the mirror and matches the middle axis of the inflatable mirror and its support frame **70.**
If the external- or internal-support frame of the inflatable mirror has a longish or elongated rectangular outline (trough-like mirror as shown in Fig. 11b), then the rotary axis **52** of this support frame may either be parallel to the ground or it may have a defined inclination towards the equator.
If the external- or internal-support frame of the inflatable mirror (**24** or **37)** has a circular outline (dish-like mirror as shown in 11a), then the rotary axis of the inflatable mirror **51** may be orientated parallel to the axis of the earth.

If the inflatable mirror is rotated around this north-south orientated rotary axis, with an rotary drive system **54,** which may rotate the support frame of the inflatable mirror with a defined constant angular velocity, e.g. in a sun-tracking application, then the position of the focal point or focal line of the inflatable mirror (created by reflected sunlight), can be kept static in reference to the inflatable mirror.

FIG. 12 :
In another similar design variant of the mirror support structure, which consists of a northern- and southern unit, the mentioned support frame of the inflatable mirror, which has a circular outline, may have an additional adjustability.

In this design variant the support frame with the circular outline may be connected with two rotary joints **58** to a cardan frame **53.** This cardan frame **53** may then be connected again with two rotary joints **58** to the northern- and southern unit of the support structure, in such a way, that the inflatable mirror can be tilted around two rotary axes, which are perpendicular to each other, and which are both perpendicular to the optical axis **13** of the mirror. These two axes may meet like the axes of a cardan joint at a point of intersection **57** in the centre of the inflatable mirror. One of these two axes, the rotary axis of the cardan frame **53,** may be orientated in a north-south direction parallel to the earth axis. The other axis, the rotary axis of the support frame **52** may be orientated perpendicular to the rotary axis of the cardan frame **53.** This rotary axis of the support frame **52** allows adjustment of the inclination of the inflatable mirror towards the equator.
In a sun-tracking application the adjustment of the inclination of the inflatable mirror, which may be done in small steps over the course of the year, can compensate the change in declination of the apparent path of the sun over the seasons. This adjustment may be done manually, or with the help of an automatic rotary drive system **54.**

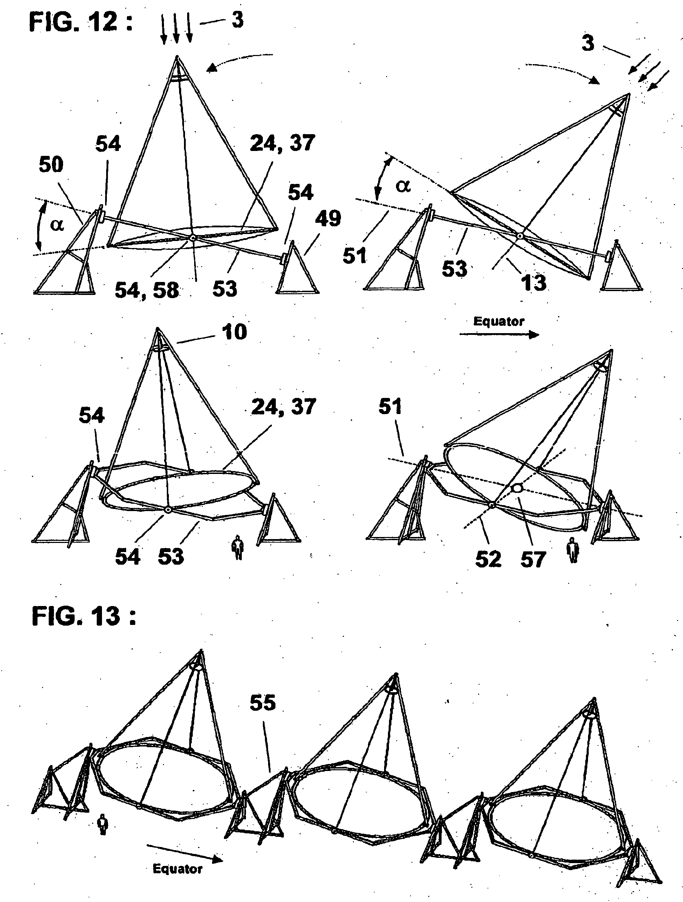

FIG 13 :
Another possible design variant may comprise the same kind of mirror support structure as described above (see figure 12), including the same adjustability of the support frame of the inflatable mirror. The only difference would be the replacement of the southern unit **50** and northern unit **49** of the support structure, which have a different design, by a standard support structure unit **55,** which has a standardized design.
This would allow the building of support structures for long rows of solar-concentrators (light concentrating mirrors) in a more economical way.
Here the rows of solar-concentrators are arranged in a north-south direction, and the support frames of two inflatable mirrors are always fixed to one standard support structure unit **55,** except for the first and last support structure unit in the row, on which only one support frame of an inflatable mirror is fixed.

For the compensation of earth's rotation (e.g. in a sun-tracking application) the above described support structure variants, which are divided in a northern- and southern unit (as described in figures 11 to 13) may have an alternative drive system to the rotary drive system described before (in FIG. 11)

FIG. 14a :
This alternative drive system also rotates the inflatable mirror with a defined constant angular velocity around the described rotary axis which runs in a north-south direction.
However here the rotation of the support frame of the inflatable mirror around the north-south orientated rotary axis of the inflatable mirror **51** may be realized by a drive arm **59.** In the case of an inflatable mirror with a circular or almost circular outline (dish-like mirror) this drive arm may be made of a semi-circular-shaped frame, which is connected to two rotary joints **58** on the opposite sides of the support frame of the inflatable mirror, in such a way, that the rotary axis **56** of the drive arm is identical to the rotary axis of the support frame **52,** and that it has an imaginary point of intersection **57** with this axis, at the centre point of the inflatable mirror. In this way a cardan fixing of the drive arm **59** is created, which allows to tilt the support frame of the inflatable mirror around its east-west orientated axis, without causing mechanical constraint on the drive arm **59.**
The mentioned semi-circular-shaped drive arm **59** may favourably be located between the (dish-like) inflatable mirror and the ground and it may be interlocked, e.g. with a semi-circular-curved gear-rack-like element or with a drive chain, which is fixed on the drive arm etc., to an automatic rotary drive system **54,** which is fixed on the ground. This drive system **54** can rotate the drive arm **59,** together with the cardan frame, support frame and the inflatable mirror, around the north-south orientated rotary axis of the inflatable mirror (or cardan frame **51**).

FIG 14b :
In the case of an inflatable mirror with a longish or elongated rectangular outline (trough-like mirror), the drive arm may either be made of a semi-circular-shaped frame, or of a triangular-shaped frame, which is connected with two of its corners to the opposite sides of the support frame of the inflatable mirror, in such a way, that the drive arm frame lies in a vertical plane, which is orientated perpendicular to the rotary axis of the support frame **52.**
Here the mentioned semi-circular-shaped or triangular-shaped drive arm **59** may be located between the inflatable mirror and the ground.

In the case where a semi-circular-shaped drive arm is used, the drive arm may be interlocked, e.g. with the help of a curved rack or the like, which is fixed on the semi-circular member of the drive arm, to an automatic rotary drive system **54,** which is fixed on the ground. This drive system can rotate the drive arm and the support frame with the inflatable mirror around the rotary axis of the support frame.
The semi-circular-shaped drive arm can be mounted near the rotary drive systems in such a way (e.g. with roller bearings or the like), that it can take on the entire support function for the support frame of the inflatable mirror, so that the northern unit and the southern unit of the support structure can alternatively be replaced by additional drive arms **59.**

In the case where a triangular-shaped drive arm is used, the third corner of the triangular-shaped drive arm may be connected to a linear drive system **60,** which is fixed on the ground. This linear drive system **60** can move the third corner of the triangular-shaped drive arm **59** in an east-west direction, which rotates the support frame and the inflatable mirror, around the rotary axis of the support frame **52.** However this drive system variant is only applicable for an inflatable mirror, which has a resticted rotary range around its support frame axis **52 .**

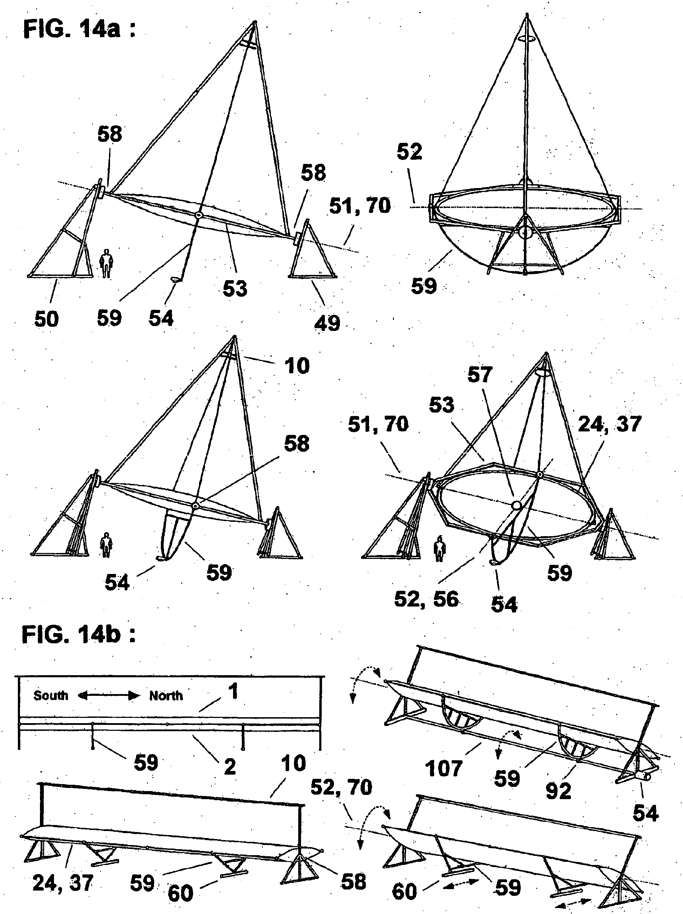

In the above described design variants for the support structure of the inflatable mirror, the tilt range of the inflatable mirror may be restricted on purpose, in order to achieve a small wind-drag coefficient, and to keep windforces at a low level. This can considerably reduce the required material expenditure and the costs for the support structure of the inflatable mirror.
For example a maximum tilt range of +/- 30 degrees from the horizontal position may be set as a limit for the inflatable mirror (in the design variants shown in FIG 8 and FIG. 10 to 14). This would keep the average wind drag coefficient of the inflatable mirror in a low range of 0.05 to 0.3

In order to allow for a considerably extended exploitation of the direct radiation of the sun, under the above mentioned condition of a restricted tilt range of the inflatable mirror in a sun-tracking application, an adjustable receiver support structure may additionally be used. This adjustable receiver support structure can guide the receiver further along the path of the focal-point or focal-line of the inflatable mirror, if the mirror is at the limit of it's tilt range, or in general if the mirror is in a static arrangement in reference to the ground, and therefore the angle of incidence of the incoming (parallel) electromagnetic radiation (e.g. sunlight) is changing in reference to the optical axis or the optical plane of the resting mirror.

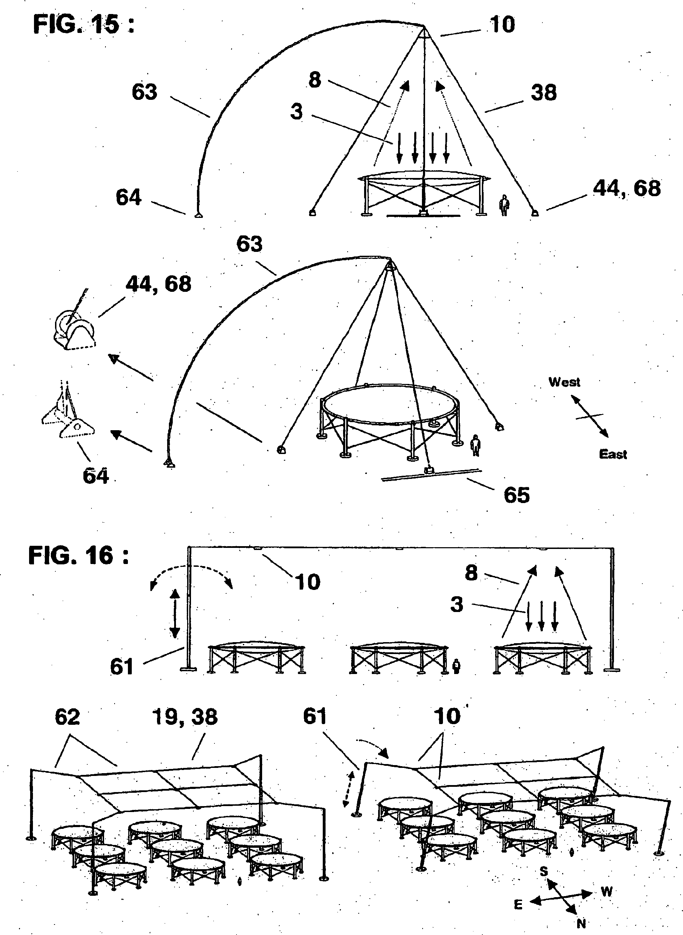

The mirror support structures described above (in FIG. 8 to 14), used in combination with an adjustable receiver support structure as described below (in FIG. 15 to 18), and with either a concentrator mirror which is constantly fixed in a horizontal orientation to the ground, or with a concentrator mirror with a restricted tilt angle, are also considered to be excellent solutions for the existing solar concentrator technology, which uses conventional mirrors made of glas or metal, especially for applications in low latitudes (this means for locations in the range of approx. +/- 30° from the equator). Because of the considerable reduced wind drag coefficient of a concentrator mirror, which is either orientated in a horizontal position, or which has a maximum tilt range of +/- 30 degrees from the horizontal position, the mirror support structure as well as joints and drive systems can be built lighter and simpler, which considerable reduces the material expenditure and the costs.

In the following,. a number of possible design variants of adjustable receiver support structures shall be described. These adjustable receiver support structures basically consist of one or more column-like receiver support elements, which may be length-adjustable by an automatic drive system, and which may be built in such a way, that the receiver can b moved in an east-west direction and in a north-south direction.

Some principle design variants for such an adjustable receiver support structure are (described in the following : (in figures 15 to 18 :)

FIG 15. :
In the first design variant for an adjustable receiver support structure, the receiver of the concentrated electromagnetic radiation **10** is fixed to an adjustable support structure, which essentially consists of an elastic bended pipe-like or bar-like support element 63 and a number of automatic winches 44 or winch-like drive-systems **68** (favourably four). Here one end of this elastic pipe-like or bar-like element **63** is fixed to a special rotary joint **64** on the ground, and the other end is fixed to the ends of the winch ropes or -lines **38,** which are adjusted to a defined length and kept under tension by the automatic winches **44,** in order to bend the pipe-like or bar-like support element in a controlled manner. In a favurable design variant four automatic winches **44,** or winch-like drive systems **68** may be used, which are fixed in a square-shaped arrangement on the ground.
And the two of the four winches, which are arranged in the east-west direction, may be fixed to small carts, which are fixed to rails **65** on the ground. Here the mentioned rails are orientated in a north-south direction, and they allow compensation for a shift of the top end of the elastic pipe-like or bar-like element (where all ropes or lines are fixed on ) in the north-south direction, which is caused by the inclination change of earth's axis in the course of the year.
By winching-in or winching-out the ropes or lines **38** in a controlled manner, the end position of the flexible pipe-like or bar-like element **63,** on which the ropes or lines and the receiver are fixed on, can be adjusted in such a way, that it can follow the slow moving focal-point, which is created by the reflected sunlight coming from the inflatable mirror. Here the receiver **10** may be fixed on the end of the flexible pipe-like or bar-like element **63** in such a way, that it can additionally be tilted around two axes via an automatic drive system, which allows a precise orientation of the receiver towards the reflected sunlight.

FIG 16 :
Another alternative for an adjustable receiver support structure may be a grid-like support structure **62** made of ropes **38,** struts or beams **19 ,** which is fixed to spherical or cardan joints **43** on the upper ends of a number of support columns **61.** These support columns **61** may then be fixed to spherical or cardan joints **43** on the ground and they may be adjustable in length and inclination with the help of automatic drive systems (drive systems not shown in figure). Here the fixing of the receivers on the grid-like support structure **62** is made in such a way, that the receivers can be tilted automatically in a defined angle range in the east-west- and north-south-direction, in order to orientate them precisely towards the reflected sunlight.
The grid-like receiver support structure **62** may be based on a grid with a square raster or with a hexagon raster and the receivers **10** and the inflatable mirrors may also be arrangend in the same square raster or hexagon raster. The described grid-like receiver support structure **62** is especially suitable for a compact array of inflatable mirrors, which are permanently fixed (not tiltable) in a horizontal orientation to the ground (as also described in figure 9).
The support columns **61** may be fixed in a grid-like pattern to the ground, which is either based on the same raster as the grid-pattern used for the grid-like receiver support structure **62,** or it is based on a different regular raster, and the grid element spacing of the raster used for the support columns is either the same as the one used for the grid-like receiver structure, or it is greater by a defined factor.
By adjusting the length and inclination of the support columns in a controlled manner, the receivers can be guided along the paths of the focal points of the inflatable mirrors. This design variant is also considered to be an excellent solution for the existing solar concentrator technology, where conventional mirrors, made of glas or metal, are used.

FIG 17. :
In another possible design variant of an adjustable receiver support structure the receiver for the concentrated electromagnetic radiation **10** may be fixed to an adjustable receiver support structure, which can be tilted around the north-south orientated axis of the support frame of the inflatable mirror, and which may essentially consist of length-adjustable column-like support elements **66,** which are either fixed on the support frame or on the support structure of the inflatable mirror.

In the following a few different sub-variants of such an adjustable receiver support structure are described (shown in figures 17a to 17f :)

FIG. 17a :
In the first sub-variant, the receiver **10** may be fixed to two length-adjustable column-like support elements **66,** which are fixed to the internal- or external support frame (**24** or **37)** of the inflatable mirror with the help of two rotary joints **58,** in such a way, that they can be tilted around the north-south-orientated axis of the support frame.
In this sub-variant either a divided support structure may be used for the inflatable mirror, which consists of a northern- and southern unit (**49** and **50**) as described in figures 11 to 14, or a support structure consisting of simple support columns may be used as already described before (in FIG. 9a).
The automatic drive system, for the tilting of the receiver support structure, around the north-south-orientated middle axis of the support frame, may be a winch-like drive-system **68** which uses ropes or lines **38,** or a chain- or a gearwheel-drive-system **82,** which uses drive belts or drive chains **67.**
The mentioned drive system either consists of two ropes or lines **38,** or of two drive belts or drive chains **67,** which are fixed on the opposite sides of the top end of the receiver support structure, and whose length and tension is controlled either by two automatic winch-like drive systems **68** or by two chain- or gearwheel-drive-systems **82,** which are fixed on the opposite sides of the support frame of the inflatable mirror, in the east-west direction. By adjusting the length of the ropes or lines **38,** or the lengthof the drive belts or the drive chains **67** in a controlled manner, the length-adjustable column-like support elements **66** together with the receiver **10,** can be tilted around the north-south-orientated middle axis of the support frame.
In the case where a support structure consisting of simple support columns is used, with a constantly fixed inflatable mirror (shown exemplary on the right in FIG. 17a), the additional required tilting of the receiver support structure in the north-south direction in a sun-tracking application, can be achieved by a defined adjustment of the lengths of the column-like support elements **66.**
In order to achieve a precise focussing of the receiver **10,** the fixing of the receiver may include an additional drive system to allow for a fine tuning of the receiver position and receiver orientation in reference to the actual focal point position of the inflatable mirror.

FIG 17b :
The next sub-variant of an adjustable receiver support structure is similar to the one described above (in FIG. 17a). However here the two ropes **38,** or the two drive belts or drive chains **67,** are not fixed on the top ends of the two length-adjustable column-like support elements **66,** but in a defined height on the opposite sides of one of the two column-like support elements.
In this sub-variant again either a divided support structure may be used for the inflatable mirror, which consists of a northern- and southern unit (**49** and **50**), as shown in figures 11 to 14, or a support structure consisting of simple support columns with a constantly fixed inflatable mirror may be used. The drive-systems which may be used in this sub-variant are the same as described in the previous sub-variant (in FIG. 17a) And the adjustment of the receiver support structure also happens in a very similar way as described in the previous sub-variant. (FIG. 17a)

FIG 17c :
In the next possible sub-variant of an adjustable receiver support structure, the receiver **10** may again be fixed to two length-adjustable column-like support elements **66,** which are fixed to the internal- or external support frame (**24** or **37)** of the inflatable mirror, in the same way as described in the two sub-variants before (in FIG. 17a and 17b.).
Again either a divided support structure (not shown) may be used for the inflatable mirror, (as described in figures 11 to 14), or a support structure consisting of simple support columns, with a constantly fixed inflatable mirror, may be used.
However in this new sub-variant the drive system may consist of one or preferably two automatic length-adjustable bar-like elements **69.**
Here one end of the mentioned bar-like element(s) is fixed on the column-like support element(s) **66** of the receiver support structure, with the help of a rotary joint **58** or spherical or cardan joint **43,** and the other end of the bar-like element(s) is fixed on the mirror support frame, also with a rotary joint **58** or spherical joint or cardan **43.**
By adjusting the length of these bar-like element(s) **69** in a controlled manner, the two column-like support elements **66** together with the receicer **10** can be rotated around the north-south orientated middle axis of the mirror, with a defined angular velocity. The described adjustable receiver support structure may also be used, in a similar version, for an inflatable mirror with rectangular-shaped support frame (not shown).

FIG.17d :
The next possible sub-variant of an adjustable receiver support structure may also be used for a divided support structure as described before (in FIG. 11 to 14). However here the adjustable receiver support structure may consist of a lower receiver support structure **96** and an upper receiver support structure **97.**
The lower receiver support structure **96** may be fixed to the internal- or external support frame (**24** or **37)** of the inflatable mirror with the help of two rotary joints **58,** so that it can be tilted around the north-south-orientated axis of the support frame.
The upper receiver support structure **97** may be fixed to the lower receiver support structure **96** in such a way, that it can be linear shifted along the symmetry axis of the lower receiver support structure. The linear shifting of the upper receiver support structure **97** may either be done by an automatic linear drive system **60** (e.g. chain- or belt-drive, spindle-drive, gearwheel drive etc.), or by a length-adjustable bar-like element **69.**
And the automatic drive system, for the tilting of the lower receiver support structure **96,** around the north-south-orientated middle axis of the support frame, may be a winch-like drive-system **68** which uses ropes **38,** or a chain- or a gearwheel-drive-system **82,** which uses drive belts or drive chains **67,** or alternatively a drive system which uses one or two length-adjustable bar-like element(s) **69** as described in the previous sub-variant in FIG. 17c (not shown).
By adjusting the length of the ropes **38,** the drive belts or the drive chains **67,** or the bar-like element(s) **69** in a controlled manner, the lower-receiver support structure **96** and the upper receiver supports structure **97,** where the receicer **10** is fixed on, can be tilted around the north-south-orientated middle axis of the support frame.
This sub-variant of an adjustable receiver support structure may also be used on all support structure variants, where the (external) support frame of the inflatable mirror can be rotated around a vertical and a horizontal axis, (as described in FIG. 10a to 10d), if the tilt range of the mirror is restricted. Here the adjustable receiver support structure may then be fixed to the support frame with rotary joints in such a way, that it can be tilted around the horizontal orientated rotary axis **52** of the support frame.

FIG 17e :
The next sub-variant of an adjustable receiver support structure is based on the same design principle as described in the first sub-variant (FIG. 17a). However here the adjustable receiver support structure may be used on an inflatable mirror with a rectangular outline.
The two length-adjustable column-like support elements **66,** may here be fixed with their top ends to the bar-like receiver **10** and with their bottom ends near the centre points of the two short sides of the rectangular internal- or external support frame (**24** or **37)** of the inflatable mirror. The fixing on the internal- or external support frame may be done with two rotary joints **58,** in a way, that the column-like support elements and the receiver can be tilted around the north-south-orientated long axis of the rectangular support frame.
The used automatic drive system, for the tilting of the receiver support structure, around the north-south-orientated middle axis of the support frame, may be identical to one of the drive systems described in the first sub-variant in FIG. 17a. (e.g. a winch-like drive systems **68** or a chain- or gearwheel-drive-systems **82**). However in this sub-variant two or more of such drive-systems are required on each long side of the rectangular support frame, because of the size (length) of the receiver.

FIG. 17f :
The next sub-variants of an adjustable receiver support structures as shown in figure 17f are based on the same design principles as explained in the previous sub-variants (in figures 17a to 17c and 17e). However here the mentioned receiver support structures are used in design variants, where the inflatable mirror, its internal- or external-support frame and its support structure form the basic structure of a building **87** (e.g. an residential building, industrial building, warehouse, garage etc.), as described before. The automatic drive system, for the tilting of the receiver support structure, around the north-south-orientated middle axis of the support frame, may be identical to one of the drive systems described in the previous sub-variants (in figures 17a to 17c and 17e).

FIG 17g :
Another alternative for an adjustable receiver support structure is described in th following. This receiver support structure may consist of a lower receiver support frame **96** and an upper receiver support frame **97,** which are connected by rotary joints **58.** In this way a rotary axis for the upper receiver support frame is created.
The upper receiver support frame **97** can be tilted around this upper rotary axis **98** with the help of either a rotary drive, which is located on one or both rotary joints (not shown), or with the help of one or more length-adjustable bar-like elements **69.** The bar-like elements may be driven by a built-in automatic drive system.
The lower receiver support frame **96** may be fixed on the northern-end and southern-end of the inflatable mirror, or on its support structure with the help of rotary joints **58** in such a way, that it can be tilted around the middle axis of the inflatable mirror, which is orientated in a north-south-direction **70,** or around an axis which is in a small parallel distance to this middle axis. The automatic drive system used for the tilting of the lower receiver support structure **96** around the middle axis **70** may be one of the drive-systems described above in the first and third sub-variant (see figure 17a and 17c). The receiver for the concentrated electromagnetic radiation **10** may be fixed to the cross-bar of the upper receiver support frame **97,** in a way that it can automatically optimize its orientation towards the reflected sunlight, by a defined slight rotation around the axis of the mentioned crossbar (e.g. with the help of a rotary drive).
Further the length of the side member(s) of the upper receiver support frame **97** may be adjustable in a telecopic-like manner by a built-in automatic drive system, in order to focus the receiver **10.**

FIG 18 :
In another possible design variant for an adjustable receiver support structure, the adjustable support structure for the receiver **10** may consist of only one support element, which may have a very similar design as a building crane **71** with along span, in order to bridge a long horizontal distance. The receiver **10** may be fixed on this crane-like support element **71** in such a way, that it can be automatically moved to the changing position of the focal point of the inflatable mirror and tilted to the correct orientation in reference to the reflected sun-light, if the inflatable mirror is a mirror which is constantly fixed (not tiltable) in a horizontal orientation to the ground (as descibed in FIG. 9). This design solution is especially suitable for an inflatable mirror with a circular outline and with a very large diameter.

All above described design variants of the inflatable mirror may additionally include the following equipment:

FIG 19 :
The inflatable mirror may comprise an additional wind-protecting sheet **73,** which may have an outer periphery or rim, with the outer periphery or rim being connected or sealed to the sheet **2** with the reflecting surface or to the transparent sheet **1,** in order to define a gasproof chamber between the wind-protecting sheet **73** and the sheet **2** with the reflecting surface, in which a defined amount of air or gas of a defined pressure may be enclosed.
In this way the sheet with the reflecting surface can be protected against deformation caused by wind gusts **74** (wind forces) or against damage in general, if a defined pressure is adjusted in the air or gas, which is enclosed in the chamber between the wind-protecting sheet **73** and the sheet **2** with the reflecting surface
For the adjustment of the pressure in the chamber between the wind-protecting sheet **73** and the sheet **2** with the reflecting surface , and for the filling of the chamber with air or gas, either the wind-protecting sheet **73** may comprise an in- and outlet for inflation and deflation **4,** or the sheet **2** with the reflecting surface may comprises one or more openings, which connect the chamber between the wind-protecting sheet 73 and the sheet **2** with the reflecting surface with the chamber between the transparent sheet **1** and the sheet **2** with the reflecting surface.
The material used for the wind-protecting sheet **73** may be a foil made of a polymeric material, which may additionally be reinforced by fibres (e.g. glass-fibres)

FIG. 20 :
Alternatively the inflatable mirror may comprise one or more wind-protecting sheet(s) **73,** which may be fixed on the support frame or on the support structure of the inflatable mirror, in order to protect the sheet with the reflecting surface **2** of the inflatable mirror against deformations caused by wind gusts **74** (wind forces).
Here the wind-protecting sheet may be fixed on the support frame or on the support structure, in such a way, that it keeps a minimum distance to the sheet with the reflecting surface **2,** in order to avoid a collision of the wind protecting sheet and the sheet with the reflecting surface, if the wind-protecting sheet gets deformed by wind gusts **74.**
To guarantee a minimum distance to the sheet with the reflecting surface, the wind-protecting sheet may be supported by tensioned ropes or lines **38** or struts **19,** or a combination of both, which may be fixed to the support frame **6** or to the support structure **7** of the inflatable mirror, and which can additionally be fixed to a drive arm (59) or to a central column (39), if available. Again the material used for the wind-protecting sheet(s) **73** may be a foil made of a polymeric material, which may additionally be reinforced by fibres (e.g. glass-fibres)

FIG. 21 :
The described design variants of the inflatable mirror may also include one or more gutter-like elements **75,** which may either be fixed along the rim of the inflatable mirror or along the support frame **6** of the inflatable mirror, in order to catch rainwater **78** which is flowing from the transparent sheet **1** of the inflatable mirror during rainfalls. Here the collected rainwater is guided to a tank or basin **77** with the help of one or more water pipes or water hoses **76,** which may be fixed on defined points on the mentioned gutter-like elements. In order to keep the inlet of at least one of the water pipes or water hoses on the deepest point of all gutter-like element(s), the gutter-like element(s) **75** may be designed in a way, which allows a shifting of the gutter-like element(s) along the rim of the inflatable mirror. This is especially advantageous for an inflatable mirror with a circular outline, where the deepest point of all gutter-like element(s), which is on the eastern- or western-side of the inflatable mirror, shifts in the course of the year, because of the required change in inclination of the inflatable mirror in the north-south direction.

FIG. 22 :
The inflatable mirror may also include an additional cleaning device **80,** which has the task to clean the transparent sheet 1 of the inflatable mirror from time to time.
This cleaning device **80** may be fixed on the topside of the inflatable mirror. The cleaning device may consist of a pipe, which has a defined number of nozzles **81,** which may be arranged in defined distances along the pipe, and which may be orientated in a defined angle towards the transparent sheet **1.**
The cleaning of the transparent sheet may is done by pressing air or water through the pipe and the nozzles, and by slowly moving the pipe over the transparent sheet.
Here the mentioned pipe may either span from one side of the support frame of the inflatable mirror to the other, or from one side of the support frame to at least the centre of the inflatable mirror. The cleaning pipe may be a bended pipe with a bending radius, which is approximately equal, or slightly larger than the approximate radius of curvature of the transparent sheet of the inflatable mirror, in order to achieve a small and nearly parallel distance between the pipe with the nozzles and the transparent sheet.
The cleaning device **80** may either be fixed to a support structure, which may be attached to the receiver support structure, in a way that it can carry out a full rotation around the optical axis of the inflatable mirror **13,** if the mirror has a circular outline. Alternatively the cleaning device may be fixed to small carts **79,** which can be moved along the mirror, if the mirror has a longish rectangular shape. Here the mentioned small carts **79** may either run directly on the transparent sheet along the periphery of the inflatable mirror or along the support frame members of the inflatable mirror, or on rails **65,** which are fixed along the peripery of to the support frame.
The described cleaning device **80** can either be permanently fixed, or it can be a device which can be temporarly attached only for the cleaning procedure, for example to the support frame of the inflatable mirror, or to rails which are fixed on the support frame, or to the receiver support structure.
The cleaning device may be either a fully automatic device with a drive system, which is activated by a control electronic for periodic cleaning procedures, or it may be a manual device which is activated, moved and operated manually.

FIG 23 :
The inflatable mirror may additionally include a device for the generation of a defined pressure in the air or gas which is enclosed in the chamber (72).
Here the defined pressure in the air or gas may be an overpressure, which may be a differential pressure between the atmospheric pressure and the pressure of the air or gas enclosed in the chamber, which is within a defined differental pressure range.
The device for the generation of a defined pressure may be an automatic device, which is either constantly or temporarily in communication with the chamber between the two sheets of the inflatable mirror, in such a way that a defined overpressure is automatically generated and maintained in the air or gas enclosed in the chamber. This automatic device may be an automatic compressor unit **72** which is connected to the in- and outlet(s) for inflation and deflation **4** of the inflatable mirror, and which automatically adjusts and controls the pressure of the gas or air **5**, which is enclosed in the inflatable mirror
The automatic compressor unit **72** may include a pressure gauge which measures the pressure of the air or gas enclosed in the inflatable mirror and another pressure- gauge (barometer) which measures the outside atmospheric air-pressure, in order to allow for an automatic adjustment of a defined difference pressure between the inside and outside of the inflatable mirror.
The device for the generation of a defined pressure **72** may also comprise means for controlling the humidity and the pollution in the air or gas which is enclosed in the chamber (→ the air in the chamber may be toped up by air from the outside from time to time in order to compensate leaking air), in order to prevent water codensation and pollution on the insides of the two sheets of the inflatable mirror.
For this purpose an air-dryer device and an air-filter may be be included in the automatic compressor unit, which have the task to keep the humidity in the enclosed air (or gas) at a defined low level and to avoid pollution, dust, condensation, corrosion and the development of mould building up on the insides of the inflatable mirror.

FIG. 24 :
In order to further improve the concentration ratio of the inflatable mirror, one or more additional optical elements may be arranged near the focal point or focal line of the inflatable mirror, placed in the optical path of the reflected electromagnetic radiation.

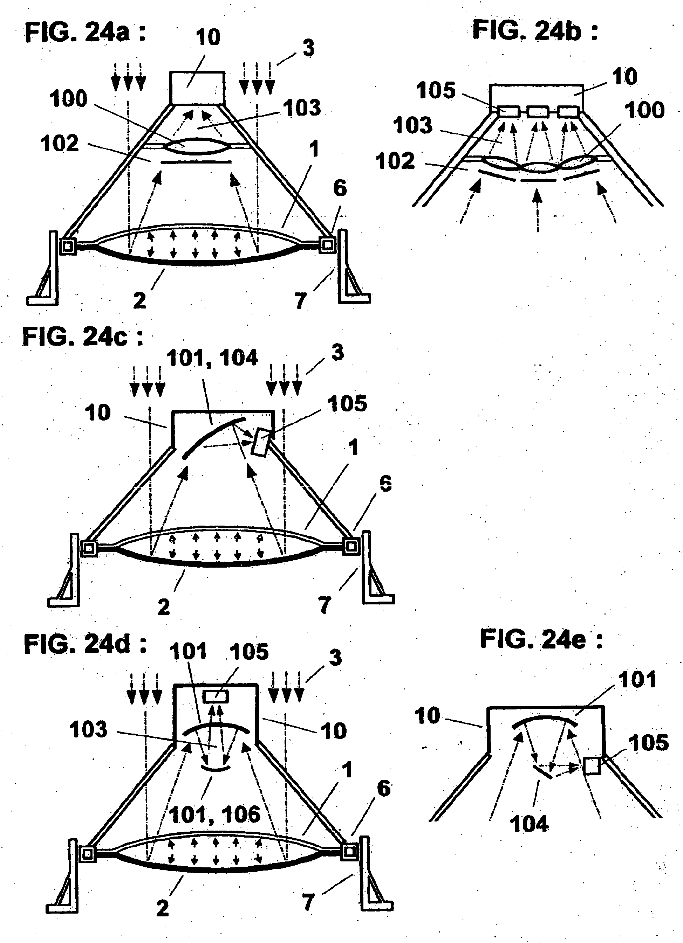

In the following a few possible arrangements of such additional optical elements are described :
FIG 24a :
   In the first possible design variant an additional refractive element **100** (e.g. lens, Fresnel-lens etc.) may be located in the optical path of the reflected radiation, in a defined position near the focal point or focal line of the inflatable mirror. This refractive element may be a standard element, or it may have very special refractive properties (e.g. like an irregular shaped lens or Fresnel-lens), in order to correct errors in the path of the rays, caused by an inaccurate curvature of the sheet with the reflecting surface **2.**
   In this design variant special receiver elements for high concentrated electromagnetic radiation **105** (e.g. HCPV-cells) may be placed in the focal point or focal line.
   Additional an optical filter **102** may be arranged in the optical path of the reflected radiation. Such a filter could have the task to prevent electromagnetic radiation of a certain range of wavelengths from reaching the receiver. (e.g. if HCPV-cells are used)
FIG. 24b :
   Another possible design variant is identical to the previous variant (FIG. 24a), except that instead of only one refractive element **100** a certain number of refractive elements is arranged in a defined way (pattern) in the optical path of the reflected radiation.
   These refractive elements may be standard elements, or they may have special refractive properties, in order to correct errors in the path of the rays.
   The described design variant is especially suitable for an inflatable mirror with a circular outline (dish-like mirror).
   In this design variant, the reflected electromagnetic radiation is eventually concentrated onto the same number of focal points, as refractive elements are available. Here again special receiver elements for high concentrated electromagnetic radiation **105** (e.g. HCPV-cells) may be placed in these focal points. Additional one or more optical filters **102** may be arranged in the optical path of the reflected radiation.
FIG 24c :
   In the next possible design variant an additional plane reflecting mirror **104** or an additional concave reflecting mirror **101** (e.g. parabolic mirror, spherical mirror, special shaped mirror) may be located in the optical path of the reflected radiation, near the focal point or focal line of the inflatable mirror.
   This reflecting mirror may again be an optical standard element, or it may have very special reflecting properties (e.g. like an irregular shaped mirror), in order to correct errors in the path of the rays, caused by an inaccurate curvature of the sheet with the reflecting surface **2.**
   In this design variant one or more special receiver elements for high concentrated electromagnetic radiation **105** (e.g. HCPV-cells) may be placed in the focal point or focal line. Additional an optical filter **102** may be arranged in the optical path of the reflected radiation.
FIG. 24d :
   The next design variant is similar to the previous described design variant (in FIG. 24c) except that instead of only one reflective mirror two reflective mirrors are arranged in a defined way in the optical path of the reflected radiation. These rejecting mirrors may be optical standard elements, or they may have special reflecting properties (e.g. like an irregular shaped mirror), in order to correct errors in the path of the rays, for example caused by an inaccurate curvature of the sheet **2** with the reflecting surface.
   Here either a combination consisting of two concave mirrors **101** or a combination consisting of a concave- and a convex mirror (**101** and **106**) may be used, which are arranged in a Cassegrain-mirror arrangement or in a Gregory-mirror arrangement (in reference to mirror arrangements in telescopes). The described design variant is especially suitable for an inflatable mirror with a circular outline (dish-like mirror). Similar to the previous design variant, one or more special receiver elements for high concentrated electromagnetic radiation **105** (e.g. HCPV-cells) may be placed in the focal point or focal line . Additionally an optical filter **102** may be arranged in the optical path of the reflected radiation.
FIG. 24d :
   In the next possible design variant, two reflective mirrors are arranged in a defined way in the optical path of the reflected radiation , similar as described in the previous variant.
   However here a concave mirror **101** and a plane mirror **104** may be used, which are arranged in a Newton-mirror arrangement (in reference to mirror arrangements in telescopes). The described design variant is especially suitable for an inflatable mirror with a circular outline (dish-like mirror).
   Similar to the previous design variant, one or more special receiver elements for high concentrated electromagnetic radiation **105** (e.g. HCPV-cells) may be placed in the focal point or focal line. Additionally an optical filter **102** may be arranged in the optical path of the reflected radiation.

From the above described masures to improve the concentration ration of the inflatable mirror especially the first and the third design variants (Fig : 24a and 24c) are especially usable for inflatable mirrors with a rectangular support frame (trough-like mirrors). However the required optical elements then have a lenticular bar-like or trough-like shape and they are only curved in one direction. Such optical elements could be easily produced by extrusion or rolling etc.

Beside the above described support structure variants, there is a number of special support structures which may also be used for the inflatable mirror.
These special support structures, which are either used instead of already described support structures or in combination with them, offer an interesting and flexible use of the inflatable mirror for a large range of applications.

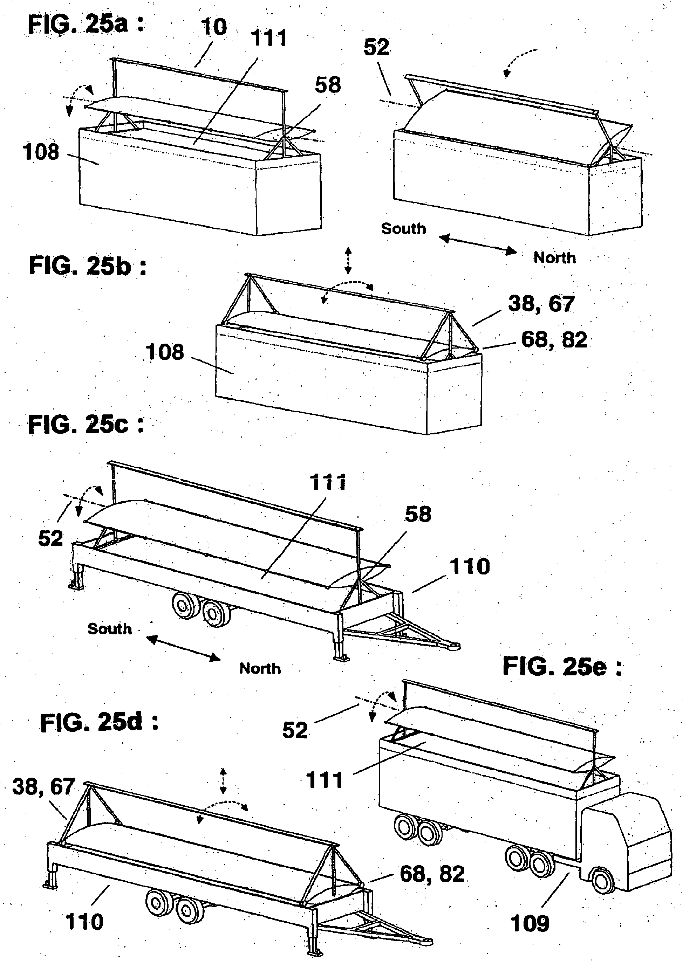

FIG. 25 :
In the following a few of these special support structures for the inflatable mirror shall be described , which allow a flexible and mobile use of the inflatable mirror. :
   FIG. 25a :
      The first special support structure describes the use of an inflatable mirror and a divided mirror support structure as described beore, (in FIG. 11 to 14) in combination with a container **108** (e.g. standard shipping container, standard air-freight container, office-container, housing container, mobile container for all kind of use : e.g. watertreatment plant etc.).
      The inflatable mirror and its divided (two pieces) support structure, as described before (in FIG. 11 to 14), can be stored in transit, in a deflated and folded or disassembled way, in a low storage room **111,** which may preferably be either included in the topside or attached (attachable) to the topside of the container, and which may be lockable in transit. For use, the inflatable mirror is unfolded or assembled and then inflated , which may be done automatically e.g. at the touch of a button, with the help of an automatic compressor unit **72** and defined drive systems.
      Here either an inflatable mirror with a rectangular shaped outline (as shown in FIG 25a) can be used, or a number of inflatable mirrors with a circular shaped outline can be used, as described before (in figures 8 and figures 10 to 14).
   FIG. 25b :
      The next special support structure describes a similar use of an inflatable mirror and a mirror support structure in combination with a container **108 ,** as described above (in FIG. 25a). However here a fixed mirror support structure may be used for the inflatable mirror, (as described exemplary in FIG. 9), together with an adjustable receiver support structure (as described in FIG. 17). This would have the advantage of a reduced wind-drag coefficient of the described arrangement.
   FIG. 25c :
      Another special support structure uses an inflatable mirror and a divided (two-piece) mirror support structure (as described in FIG 11 to 14) in combination with a trailer **110.**
      Here the inflatable mirror and its support structure, (as described in FIG. 11 to 14), can again be stored in transit, in a deflated and folded or disassembled way, in a low storage room **111,** which is formed by the chassis of the trailer **110.**
      For use, the inflatable mirror is unfolded or assembled and then inflated, (as described in FIG. 25a), which again may be done automatically e.g. at the touch of a button, with the help of an automatic compressor unit **72** and defined drive systems.
      Instead of an inflatable mirror with a rectangular shaped outline (as shown in FIG. 25c) a number of inflatable mirrors with a circular shaped outline may be used, (as described in figures 8 and figures 10 to 14).
   FIG. 25d : Describes a similar use of an inflatable mirror and a mirror support structure in combination with a trailer **110,** as described in FIG. 25c. However here a fixed mirror support structure may be used for the inflatable mirror, as described exemplary in FIG. 9 , together with an adjustable receiver support structure as described in FIG. 17.
      This would have the advantage of a reduced wind-drag coefficient of the described arrangement.
   FIG. 25e :
      Another special support structure may use an inflatable mirror and a divide mirror support structure in combination with a truck **109.**
      Here the inflatable mirror and its support structure, (as described in FIG. 11 to 14), can again be stored in transit, in a deflated and folded or disassembled way, in a low storage room **111,** which may be either included in the topside, or attached to the topside of the truck **109,** and which may be lockable in transit.
      Here also a fixed mirror support structure may be used for the inflatable mirror, as described in FIG.25d for the trailer, together with an adjustable receiver support structure as described in FIG. 17. (not shown)

At last a very special application of the inflatable mirror shall be described :
Because the inflatable mirror can also be filled with a gas which is lighter than air (e.g. helium), the inflatable mirror may be used for a solar plant which is able to float in the high atmosphere. Because it would drift with the same speed as the air-masses around it, there would be nearly no windforces acting on the solar power plant. Additional there are nearly unlimited sunshine hours predominant in the high atmosphere.

In the following a description is given for such a floating solar plant.

FIG. 26 :
The basic element of the mentioned floating solar power plant is a very large inflatable mirror with a preferably circular outline, which may either have an internal- or external support frame (**24** or **37**). This inflatable mirror is fixed to the two ends of a fork mount **93,** with the help of two rotary joints **58.**
Here the U-shaped fork mount **93** hangs like a pendulum on the two rotary joints **58,** which are fixed on opposite sides of the support frame.
Because of this pendulum-like arrangement, the center column **120** of the fork mount is always in a vertical position, independent from the position of the inflatable mirror, which can be tilted around the horizontal rotary axis of the support frame **52** in order to track the path of the sun.
Here the tilting of the mirror may be done either by rotary drive systems **54** which are located near the mentioned rotary joints **58.** Or the tilting may be done by winch-like **68** or chain-like **82** -drive systems, which may be fixed on the fork mount **93,**
In order to track the sun, the inflatable mirror can also be rotated around a vertical rotary axis **119.** Here the rotation around the vertical rotary axis **119** may be done with the help of the inertia of a mass which is located on the bottom end of the mentioned center column **120** of the U-shaped fork mount **93.** This mass may be the mass of a rotating deck, which is rotatable fixed to the bottom end of the center column.
This rotating deck may be the middle deck **114** of an observation station, which may also comprise a fixed upper deck **112** and a fixed lower deck **113,** which may be used e.g. as control rooms, storage rooms, as observation decks for visitors etc. Alternatively the rotation around the vertical rotary axis **119** my be done with the help of air propulsion systems **126,** such as propeller- or air-jet-propulsion systems, which may be fixed on defined points on the upward-pointing sides of the U-shaped forkmount, or on defined points on the support frame of the inflatable mirror.
Or the rotation around the vertical rotary axis **119** may be done by the use of a combination of air propulsion systems and a system which uses the moment of inertia of a defined mass.
Where the centre column **120** meets the two legs of the fork mount a flight deck **118** may be located, on which a shuttle **116** for the transport of water to the power plant, and for the transport of produced hydrogen, back to the ground, can land and take-off.
This shuttle **116** may also be used for the transport of visitors and staff to and from the station. In order to fine tune the position of the receiver **10** an adjustable receiver support structure consisting of length adjustable column-like elements **66** may be used. Here the adjustable receiver support structure may be fixed in such a way, that ist can be tilted around a rotary axis **117** which is orientated vertically to the the rotary axis of the the support frame **52.** The tilting of the adjustable receiver support structure may be done with the help of ropes or drive-chains etc. which may be driven by a winch-like drive system **68** or a chain-drive system **82** etc..
In order to keep the large inflatable mirror in balance, an additional external support frame **24** might be fixed on the backside of the mirror, on which then a counterweight **115** may be fixed. This counterweight **115** may comprise the tank for water, the tank for produced hydrogen and coolant for the receiver etc.

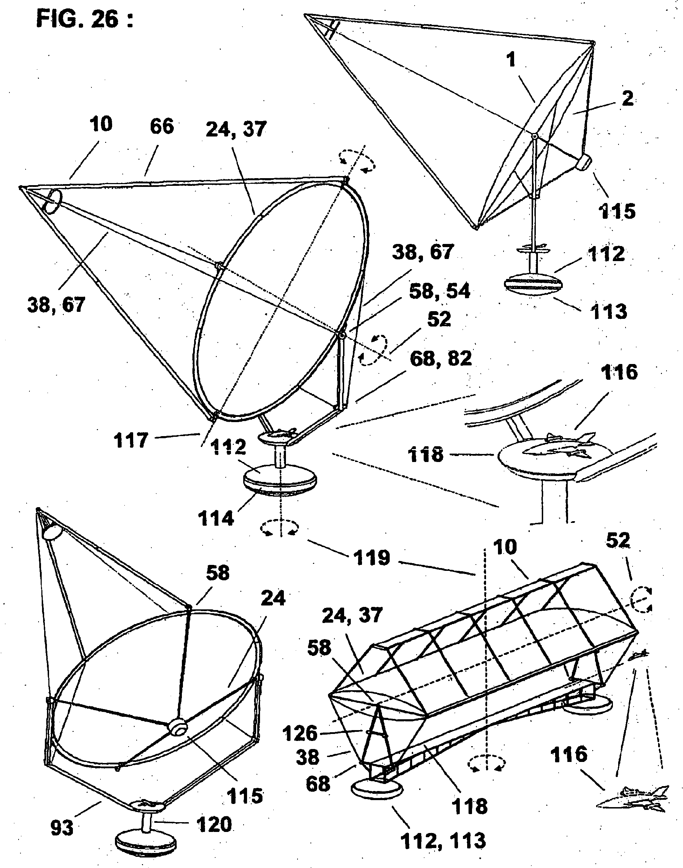

Similar to the above described floating power plant with a circular mirror a floating plant with a rectangular mirror can also be build. A design concept for such a plant is shown in Fig. 26

In the following a few ways to increase the concentration ratio of the inflatable mirrors shall be described :
To achieve a higher concentration ratio of the focused electromagnetic radiation **8,** the line of curvature of the sheet with the reflecting surface 2 may be optimised towards a defined curvature by defined measures. Here the line of curvature may be optimised towards a parabola-like of curvature **122.**

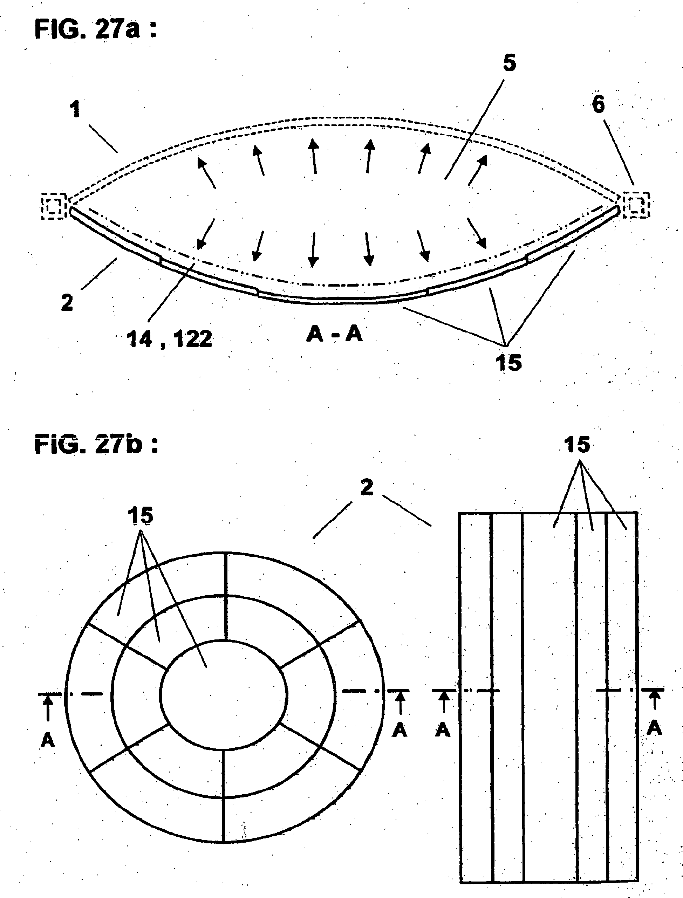

For this, one or more of the measures may be used :
(as described in figures 27 to 30)

FIGS. 27 a and b :
The sheet **2** with the reflecting surface may be joined in a defined way out of a plurality of segments with defined outlines **15,** which either have all the same thickness, or which have a defined number of different thicknesses. This is done in such a way, that the completed sheet **2** with the reflecting surface assumes the intended optimised line of curvature, if a defined pressure is adjusted in the air or gas, which is enclosed in the inflatable mirror.

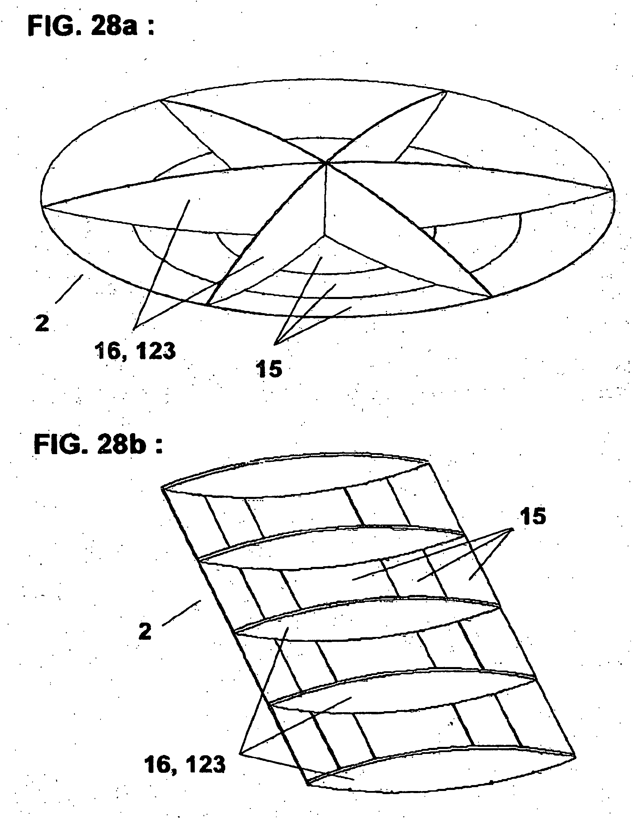

Another measure which may be used to achieve the intended optimised curvature and the higher concentration ratio of the focused electromagnetic radiation, is the use of additional support elements **123,** which help to optimise the curvature of the sheet **2** with the reflecting surface. This shall be described in the following : (This is shown in Figures 28 to 30)

FIGS. 28a and b :
For example the curvature of the sheet **2** with the reflecting surface may be optimised with sheet-like elements **16,** which are fixed on the inside of the transparent sheet 1 and on the inside of the sheet **2** with the reflecting surface in such a way, that they act like supporting walls between the two sheets, and that they define the distance between the two sheets along their fixing lines. Here the sheet-like support elements are arranged in a defined pattern between the two sheets of the inflatable mirror.
In this way the curvature of the sheet with the reflecting surface and the concentration ratio of the mirror is optimised by these sheet-like support elements **16,** if a defined pressure is adjusted in the air or gas, which is enclosed in the inflatable mirror. The material used for the sheet-like support elements may be a special polymeric material.

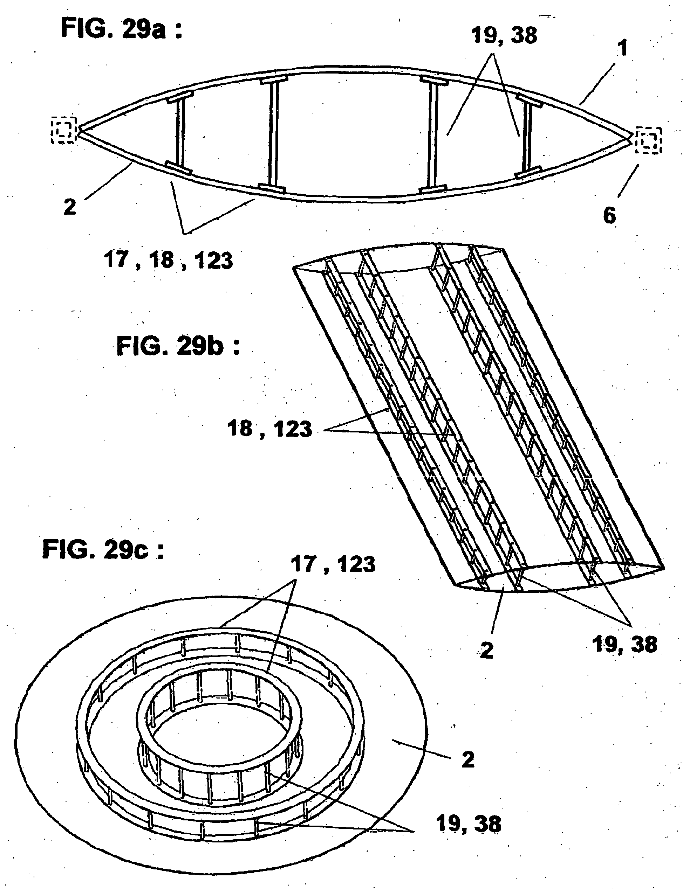

FIGS. 29 a to c :
Another kind of support elements which may be used for the optimisation of the curvature of the sheet with the reflecting surface, are either ring-shaped support elements **17** or bar-like support elements **18,** which may be fixed either on the insides or on the outsides of the two sheets of the inflatable mirror. In this embodiment, the ring-shaped support elements are used for a mirror with a circular outline, and the bar-like elements are used for a mirror with a rectangular outline.

Two of such ring-shaped or bar-like support elements always form a pair which is connected either with ropes **38** or other lines, or struts **19,** which define the distance between these support elements **17** and **18 ,** and always one of the two support elements of such a pair is fixed on the transparent sheet **1** and the other one is fixed on the sheet **2** with the reflecting surface . In this way the curvature of the sheet with the reflecting surface and the concentration ratio of the mirror is optimised by these pairs of support elements, if a defined pressure is adjusted in the air or gas enclosed in the inflatable mirror.

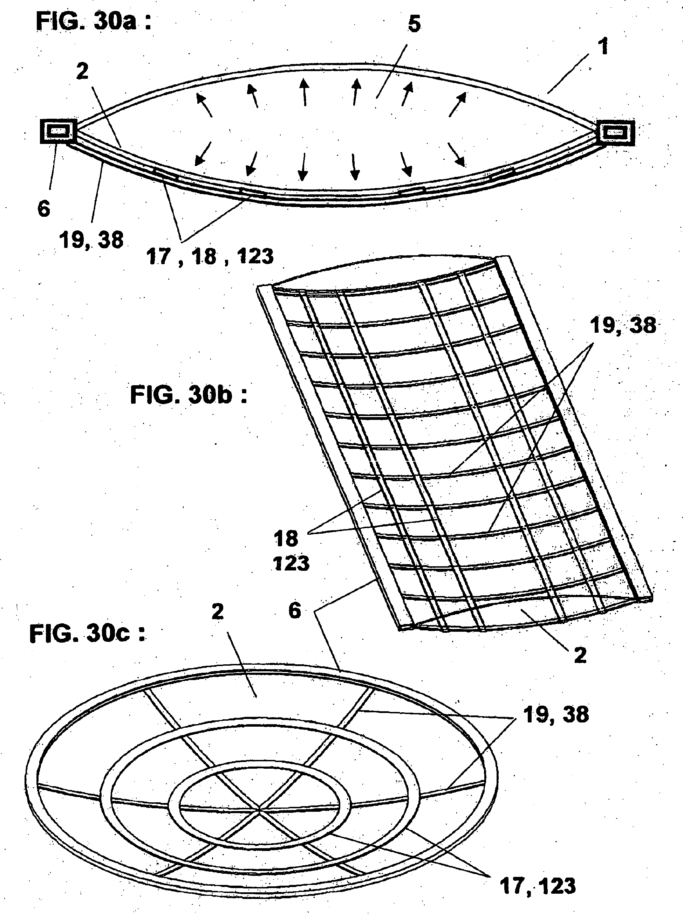

FIGS. 30 a to c :
Another alternative which may be used to optimise the curvature of the sheet with the reflecting surface **2,** is the use of ring-shaped support elements **17** or bar-like support elements **18** (depending on the outline of the mirror), which on the one side are fixed to the support frame **6** or to the support structure **7** of the inflatable mirror, with the help of struts **19** or ropes or lines **38,** and which on the other side are either fixed on the inside or on the outside of the sheet with the reflecting surface, or which just contact this sheet in defined areas on the outside. The curvature of the sheet with the reflecting surface is then optimised in the defined fixing areas or contact areas, if a defined pressure is adjusted in the air or gas, which is enclosed in the inflatable mirror.

### Technical field and background art :

In general the inflatable mirror and its support structure in accordance with the invention is a device for the reflection and the concentration of electromagnetic radiation coming from a point-like radiator. In particular it is a device for the concentration of electromagnetic radiation coming from the sun, or in other words a solar energy- or solar heat collector.
There is a number of old and new patents existing, which refer to inflatable mirrors. Basically the inflatable mirrors can be devided in the two classes, where either an over-pressure or a partial vaccum is used in the air or gas which is enclosed in the mirror, in order to form the curvature of the mirror. These two classes can further be subdivided in inflatable mirrors which either use a rigid support structure or in inflatable mirrors which are pure pneumatic structures.
All known inventions of inflatable mirrors which are intended to be used in the field of solar power generation show certain disadvantages or deficits, which disqualify them for an economical and reliable longterm application in the field of solar power generation. Therefore it was the goal of this invention to develop a new kind of inflatable mirror and a row of rigid support structures for it, as well as some complete design concepts for solar concentrators which acceptably meet the following requirements : low wind drag coeffcient, high stability, UV-resistance, economical to build, to assemble and to service, favourable distribution of forces, a precisely controlled airpressure in the air or gas enclosed in the inflatable mirror, in order to keep the receiver precisely in focus and compensate leakage, prevention of condensation and pollution on the insides of the mirror etc. etc.

**The advantages** of the Lightweight low-cost solar concentrator are as follows :
The inflatable mirror and its support structure in accordance with the invention is made of light-weight structural components.

The material which is used for the two sheets of the mirror is extremely light. And the structural components for the support structure of the inflatable mirror in accordance with the invention are essentially made of lightweight standard merchant material (e.g. standard merchant bar with a tube-like, angle-like or channel-like crossection), which is easy available, simple in handling and cheap. The material of the two sheets of the inflatable mirror can be 100% recycable material, if recycable polymer foils are used.

The design of most of the support structures for the inflatable mirror, in accordance with the invention, is made in such a way, that the distribution of the forces in the support structures is very favourable, which leads to lightweight structures and relatively small drive systems. And the structural components of the support structures are essentially made of low-cost standard merchant material (e.g. standard merchant bar with a tube-like or angle-like crossection etc.), which is easy available, simple in handling, lightweight and cheap.

The aerodynamic favourable shape of the inflatable mirror in accordance with the invention is a major advantage. The shape of the cross section of the inflatable mirror, comes close to the ideal aero-dynamic shape with a very low wind drag coefficient of around 0.05. This low wind drag coefficient can be achieved in applications where the inflatable mirror is permanently mounted in a horizontal orientation and used together with an adjustable receiver support structure.
For applications where the maximum tilting angle of the mirror in reference to a horizontal orientation is restricted to around +/- 30° the wind drag coefficient can be kept below 0.3. And even in the worst orientation, perpendicular to the wind, the wind drag coefficient of the inflatable mirror is ≤ 0.8, which is a favourable value if compared with the worst wind drag coefficients of existing concentrators. A small wind drag coefficient allows to build light support structures for the mirror, whereby the costs of the support structure can be reduced considerably.

The simple fixing methods used to fix the inflatable mirror on the support structure allow an easy change of the two sheets of the inflatable mirror. In the case of damage or excessive wear the inflatable mirror can be changed very quick.

The solar concentrators in accordance with the invention can be easy assembled and serviced in a number of the described design variants, which allows ordinary people to do the assembly work and the servicing by themselves, which keeps purchase- and service costs at a low level, especially in small scale applications. The protective property of the transparent sheet of the inflatable mirror is also an advantage. Because the transparent sheet is gasproof connected to the sheet with the reflecting surface, the reflecting surface of the mirror is protected against corrosion, abrasion and pollution caused by moisture, dust, insects etc. The transparent sheet of the inflatable mirror can even be used to collect rain water, which is a welcome additional function, especially in the arid regions of the world.

**The range of application** of the Lightweight low-cost solar concentrator in accordance with the invention is extensive. The following list shows a selection of the most interesting applications

The lightweight solar concentrators in accordance with the invention can either be used for the production of heat energy or electrical energy (e.g. by the use of HCPV- cells), in small stand-alone solar power systems for various residential applications, or they can be used for the medium or large scale production of heat energy, chemical energy or electrical energy for all kinds of industrial applications. The inflatable mirror and its support structure, if they are of sufficient dimensions, can additionally be used as the base structure for a building of various kind, which is an interesting additional use of the solar concentrator according to the invention.

The lightweight inflatable solar concentrators are also excellent suited for mobile applications because of their low weight, their simple design and the possibility to deflate the mirror for transport and store it in a low storage room. For example they can be used in mobile applications in combination with a trailer, a truck, or a container such as a standard shipping container, where the inflatable concentrator is build-in and stored in a low storage room and can be used as required.

Besides, the inflatable concentrators can be used to collect rain water in all above mentioned small- or large scale applications, which is a valuable additional option. And they can be used as powerful dish antennas in radio astronomy applications.

The design principle of the lightweight solar concentrator, in accordance with the invention, can also be used in a special application, where the inflatable mirror is filled with gas ligther than air (e.g. helium) as the base for the design of new kinds of very large solar power plants, which can float in the high atmosphere. Such floating power plants could be used for the production of liquid hydrogen.

### Designations Reference List:

- **1**: transparent sheet
- **2**: sheet with reflecting mirror-like surface
- **3**: electromagnetic radiation (e.g. sunlight)
- **4**: means for inflation & deflation of the chamber between the two sheets
- **5**: air or gas with defined (over-) pressure
- **6**: rigid support frame of the inflatable mirror
- **7**: mirror support structure (→ support structure for inflatable mirror with support frame)
- **8**: focused reflected electromagnetic radiation
- **9**: receiver support structure
- **10**: receiver for concentrated electromagnetic radiation (sunlight)
- **11**: adjustable receiver support structure with automatic drive system
- **12**: angle of incidence of incoming (nearly parallel) elecromagnetic radiation (sunlight) in reference to the optical axis or the optical plane of the inflatable mirror (αₓ : angle of incidence in north-south direction ; α_{y} : angle of incidence in east-west direction)
- **13**: optical axis or optical plane of the inflatable mirror
- **14**: line of curvature of the sheet with the reflecting surface
- **15**: segments with defined outlines (foil)-cuts which have either all the same thicknesses or which have a defined number of different thicknesses
- **16**: sheet-like support elements for the optimization of the line of curvature of the sheet with the reflecting surface
- **17**: ring-shaped support elements
- **18**: bar-like support elements
- **19**: strut(s) (or beams)
- **20**: loops → made of flap-like extensions or additions on one or both sheets of the inflatable mirror, which are formed into loops
- **21**: loops which can be opened and closed
- **22**: lock-element (e.g. clamping element, hook-and-loop fastener (Vecro) etc.)
- **23**: gas-proof lock-element (e.g. clamping element (fastener) or hook-and-loop fastener (Vecro-fastener) etc. which may include a seal to achieve a gas-proof connection)
- **24**: external support frame
- **25**: frame elements, made either of standard merchant material with a tube-like, angle-like or channel-like crossection (material : e.g. steel, aluminium alloy, plastic)
- **26**: connecting elements
- **27**: frame elements having the form of ring segments
- **28**: support frame with the shape of a closed ring
- **29**: outer frame (of external frame) made of frame elements as described under Pos. 25
- **30**: inner frame (of external frame) made of tensioned rope or line such as a cable
- **31**: inner frame (of external frame) made of ring-segments or bars, which act as clamp-elements
- **32**: inner frame (of external frame) made of frame elements as described under Pos. 25
- **33**: pulleys or slide elements
- **34**: device to adjust tension in rope (inner frame)
- **35**: flexible (strechable) connecting elements
- **36**: fixing ropes (or lines), which can be tensioned either individually or in groups
- **37**: internal support frame
- **38**: rope(s) or line(s)
- **39**: (tube-like) central column - (may additional represent a central external fixing element )
- **40**: gasproof seal
- **41**: framework of spokes or braces
- **42**: solid base or pedestal on the ground (e.g. made of concrete or structural steel)
- **43**: spherical (spheroidal-) joint or cardan joint
- **44**: automatic winch
- **45**: rigid bar-like element whose length can automatically be adjusted in a telescopic-like manner with a drive system
- **46**: rigid bar-like element, whose end-point can be moved automatically, with the help of a driven cart-like- or sledge-like element, which is fixed to a rail on the ground
- **47**: **DELETED !** (same item as item No. 7 !)
- **48**: column
- **49**: northern unit of the support structure of the inflatable mirror (Note : → location reference in drawings : 30° southern latitude)
- **50**: southern unit of the support structure of the inflatable mirror
- **51**: rotary axis of cardan frame
- **52**: rotary axis of support frame
- **53**: cardan frame
- **54**: automatic rotary drive system (e.g. electric- or hydraulic gearmotor, chain- or belt-drive, pinion drive system etc.)
- **55**: standard support structure unit
- **56**: rotary axis of drive arm
- **57**: point of intersection of the rotary axes of the support frame and the cardan frame
- **58**: rotary joint (bearing)
- **59**: drive arm
- **60**: automatic linear drive system (chain- or belt-drive, spindle-drive, gearwheel drive etc.)
- **61**: support columns, which are fixed to spherical or cardanic joints on foundations on the ground and which are adjustable in length and inclination with an automatic drive system
- **62**: grid-like receiver support structure made of ropes or struts
- **63**: elastic-bended pipe-like or bar-like support element
- **64**: rotary joint of elastic-bended pipe-like or bar-like element fixed to a foundation
- **65**: (straight) rail (may include small carts attached to it)
- **66**: column-like receiver support element which is adjustable in length by an automatic drive system
- **67**: drive belt or drive chain
- **68**: winch-like drive system
- **69**: drive system consisting of automatic length-adjustable bar-like elements
- **70**: middle axis of inflatable mirror and support frame, orientated in a north-south-direction
- **71**: receiver support structure, similar in design as a building crane
- **72**: automatic device for the generation of a defined pressure (e.g. an automatic compressor unit which comprises all components required to adjust a defined differential pressure between the air (or gas) enclosed in the inflatable mirror and the surrounding atmospheric pressure (→ e.g. a compressor, storage tank, valves, pressure gauge, barometer etc.), can additionally include a special air-filter and an airdryer unit to keep humidity and dust of the air or gas enclosed in the inflatable mirror to a low level.
- **73**: wind protecting-sheet(s)
- **74**: wind gust
- **75**: gutter-like elements (for the collection and guidance of rainwater)
- **76**: water nines or water hoses
- **77**: tank or basin for the collection of rainwater
- **78**: rainwater
- **79**: small cart
- **80**: cleaning device
- **81**: pipe with nozzles which are arranged in defined distances and through which water or air is pressed
- **82**: chain-drive-system or belt-drive-system
- **83**: U-shaped framework
- **84**: wheel
- **85**: (ring-shaped) foundation or pedestal
- **86**: weight
- **87**: building (residential- or industrial building, warehouse, silo, watertower, stadium, garage etc.) → formed by the inflatable mirror, its support structure and its internal- or external-support frame
- **88**: central pivot (may include a rotary sensor for the recognition of the horizontal angle position)
- **89**: vertical rotary axis
- **90**: circular rail made of ring segments (favourably with a U-shaped cross-section), with a built-in circular rack or notch pattern etc.
- **91**: post (connecting the circular rail to a foundation on the ground)
- **92**: pinion, sprocket (or a combination of a sprocket and a bearing)
- **93**: U-shaped fork mount
- **94**: bearing
- **95**: steel pipe
- **96**: lower receiver support frame
- **97**: upper receiver support frame
- **98**: upper rotary axis
- **99**: folding frame
- **100**: refractive element (e.g. lens, Fresnel-lens, special-shaped glass- or plastic element etc.)
- **101**: concave reflecting mirror (e.g. parabolic mirror, spherical mirror, special shaped mirror)
- **102**: optical filter
- **103**: path of rays coming from the refractive element or from the reflecting mirror
- **104**: plane reflecting mirror
- **105**: receiver element for high concentrated electromagnetic radiation (e.g. HCPV-cell)
- **106**: convex reflecting mirror (e.g. parabolic mirror, spherical mirror, special shaped mirror)
- **107**: central drife shaft
- **108**: container (e.g. standard ship container, standard air-freight container etc.)
- **109**: truck
- **110**: trailer
- **111**: low storage room for inflatable mirror, support structure, receiver etc. and all other components required for a complete power plant
- **112**: station - upper deck (e.g. control rooms, observation deck, etc.)
- **113**: station - lower deck (e.g observation deck, passenger rooms, hotel)
- **114**: station - middle deck → can act as a rotary mass (e.g. storage rooms, equipment etc.)
- **115**: counterweight (e.g. tanks for water, hydrogen, fuel, coolant etc.)
- **116**: shuttle for transport of water to power plant and for transport of produced hydrogen back to the ground, shuttle can also be used for passenger transport there and back → shuttle can be a transport helicopter, a vertical take-off plane or any other kind of flying object which is able to land on a small flight deck
- **117**: rotary axis of receiver support structure
- **118**: flight deck or runway
- **119**: vertical rotary axis of power plant and axis of rotary mass (e.g. = middle deck)
- **120**: center column
- **121**: easy detachable fixing
- **122**: prapabola-like line of curvature
- **123**: additional supporting elements for the scheet with the reflecting surface
- **124**: detachable connection between the two sheets of the inflatable mirror
- **125**: central external fixing element
- **126**: air propulsion system

## Claims

1. An inflatable light concentrating mirror comprising two sheets (1, 2) substantially made of flexible polymer foil, or are made of flexible polymer foil which is reinforced by fibres and wherein the two sheets of the inflatable mirror comprise a UV-resistant or substantially UV-resistant polymer material,
and the sheets being fixed to a rigid support, or envelope a rigid support which defines the outer periphery of the inflatable mirror, said rigid support being fixed to a mirror support structure (7),
wherein the sheets being connected or sealed to each other to define a chamber therebetween which is adapted to be inflated with air or gas (5) to form the inflated mirror, wherein each sheet (1, 2) has an outer periphery and both outer peripheries being connected or sealed to each other so as to define an air- or gasproof chamber therebetween,
wherein both sheets (1, 2) being elastic and one of the sheets (1) being transparent for a defined range of electromagnetic radiation and the other sheet (2) has essentially a reflecting mirror-like surface which is reflective for a defined range of electromagnetic radiation (8), and
wherein means are provided for inflating or deflating the mirror by adjusting the pressure in the air or gas (5) that is enclosed in the chamber, said means comprising an device for the generation of a defined pressure in the air or gas (5) which is enclosed in the chamber and on which a curvature of the mirror is basically depending,
and a receiver (10) is arranged in a focal point or in a focal line of the inflatable mirror in the surrounding area of the inflatable mirror to receive the electromagnetic radiation (8) being reflected by the reflecting mirror-like surface,
**characterized in that** said device comprises an automatic device (72) for the generation of a defined overpressure which is a differential pressure between the atmospheric pressure and the pressure of the air or gas enclosed in the chamber, which is within a defined differential pressure range,
and said automatic device is formed by an automatic compressor unit (72) including a pressure-gauge which measures the pressure of the enclosed gas and another pressure-gauge which measures the outside atmospheric air-pressure and being either constantly or temporarily in communication with the chamber such that the defined overpressure is automatically generated and maintained in the air or gas enclosed in the chamber by inflation and deflation of the chamber.

2. A combination for transforming electromagnetic radiation into one of electric energy, thermal energy and/or chemical energy, the combination comprising:
(a) the inflatable light concentrating mirror as claimed in claim 1, wherein the receiver (10) for the concentrated electromagnetic radiation comprises a device for the absorption and the transformation of electromagnetic radiation into one of electric energy, thermal energy or chemical energy.

3. The combination as claimed in claim 2, further comprising a receiver support structure for supporting the receiver (10) for the concentrated electromagnetic radiation on or to the support of the inflatable mirror or in area surrounding the inflatable mirror.

4. The combination as claimed in claim 3 wherein said receiver support structure is a rigid receiver support structure which is fixed on the support of the inflatable mirror such that the receiver (10) is located in the focal point or in the focal line of the inflatable mirror.

5. The combination as claimed in claim 3 wherein the receiver (10) for the concentrated electromagnetic radiation is mounted relative to the inflatable mirror with an adjustable receiver support structure in such a way, that it can follow the path of the focal point or focal line of the inflatable mirror in a defined range if the angle of incidence of incoming electromagnetic radiation is changing in reference to the optical axis or the optical plane of the inflatable mirror.

6. The combination as claimed in claim 3 wherein said mirror support structure comprises a number of simple support columns which are fixed essentially with their top ends to said rigid support of the inflatable mirror and their bottom ends to foundations or fixing points on the ground in such a way that the rigid support has a defined parallel distance to the ground, or that is has a defined inclination towards the ground, in the north-south direction.

7. The combination as claimed in claim 6 in which the inflatable mirror, the rigid support and the mirror support structure form the basic structure of a building.

8. The combination as claimed in claim 3 werein said mirror support structure is mounted to the ground in such a way, that it is rotatable around a vertical rotary axis, and wherein said rigid support is mounted to this mirror support structure in such a way, that it is rotatable around a horizontal rotary axis.

9. The combination as claimed in claim 3 wherein said mirror support structure comprises a support structure, which consists of a first and second unit, the first unit being located on the southern end of the inflatable mirror and the second unit being located on the northern end of the inflatable mirror, and wherein the inflatable mirror is rotatably fixed to these separate units with two rotary joints, in such a way, that it can be tilted around a rotary axis, which runs in a north-south direction.

10. The combination as claimed in claim 6 wherein said receiver support structure comprises an adjustable receiver support structure, which consists essentially of a grid-like support structure, which is fixed to the upper ends of a number of length and inclination-adjustable support columns, which are fixed to the ground, and wherein a number of receivers for electromagnetic radiation are fixed in a grid-like manner to the receiver support structure, wherein a plurality of the inflatable mirrors are essentially permanently fixed in a grid-like pattern to the ground, and wherein the fixing of the receivers on the grid-like support structure is made in such a way that the receivers can be tilted automatically in a defined angle range, in order to orientate the receivers precisely towards the electromagnetic radiation reflected from the plurality of inflatable mirrors.

11. The combination as claimed in claim 3 wherein said receiver support structure comprises an adjustable receiver support structure consisting essentially of two length-adjustable column-like receiver support elements, each having an end that are either connected to each other to support the receiver, or to opposing sides of the receiver.

12. The combination as claimed in claim 6 wherein said receiver support structure comprises a commercial building crane with a long span or a crane-like device, and wherein the receiver is fixed to this support structure in such a way, that it can be automatically moved to a changing position of the focal point or focal line of the inflatable mirror and tilted to the correct orientation in reference to incoming sun-light which is reflected by the inflatable mirror

13. The combination as claimed in claim 3 further comprising one or more additional refractive or reflective elements, which are located on defined positions in the optical path of the reflected radiation, and wherein additional one or more optical filters may also be included in order to restrict the light spectrum which arrives on the receiver.

14. The combination as claimed in claim 3 further comprising a wind-protecting, sheet which has an outer periphery or rim being connected and sealed to the sheet (73), with the reflecting surface or to the transparent sheet, in order to define a gasproof chamber between the wind-protecting sheet (73) and the sheet with the reflecting surface wind-protecting sheet is fabricated from a foil made of a polymeric material, which can additionally be reinforced by fibres (e.g. glass-fibres).

15. The combination as claimed in claim 3 wherein one or more gutter-like elements (74) are either fixed on the outer rim area of the inflatable mirror or on the rigid support of the inflatable mirror, in order to catch rainwater which is flowing from the transparent sheet of the inflatable mirror during rainfalls.

16. The combination as claimed in claim 3, wherein the combination is provided on a truck or trailer, and wherein the inflatable mirror and its support structure is configured to be in a deflated, folded or dissembled state during transit, wherein in use, the inflatable mirror or a group of inflatable mirrors is unfolded or assembled and inflated, either manually or automatically with the help of an automatic compressor unit and automatic drive systems.

17. The combination as claimed in claim 3, wherein the combination is provided on the topside of a shipping container, airfreight container, or any other kind of mobile container, wherein the inflatable mirror and its support structure is configured to be in a deflated, folded or dissembled state during transit within the container, and wherein in use, the inflatable mirror or a group of inflatable mirrors and their support structures are unfolded or assembled, and inflated, either manually or automatically with the help of an automatic compressor unit and automatic drive systems, so as to be provided on the topside of the container.

18. Use of an inflatable mirror according to claim 1 as floating solar power plant, wherein the inflatable mirror is filled with a gas which is lighter than air (e.g. helium or hydrogen) and wherein the inflatable mirror is used as a solar power plant which floats essentially unpowered in the high atmosphere.

## Patentansprüche

1. Aufblasbarer, lichtkonzentrierender Spiegel, der zwei Bahnen (1, 2) umfasst, die im Wesentlichen aus flexibler Polymerfolie hergestellt sind oder aus flexibler, faserverstärkter Polymerfolie hergestellt sind, und wobei die zwei Bahnen des aufblasbaren Spiegels ein UV-beständiges oder im Wesentlichen UV-beständiges Polymermaterial umfassen,
und wobei die Bahnen an einer starren Stütze befestigt sind oder eine starre Stütze umhüllen, die den Außenumfang des aufblasbaren Spiegels definiert, wobei die starre Stütze an einer Spiegelstützstruktur (7) befestigt ist,
wobei die Bahnen miteinander verbunden oder versiegelt sind, um eine Kammer dazwischen zu definieren, welche dazu geeignet ist, mit Luft oder Gas (5) aufgeblasen zu werden, um den aufgeblasenen Spiegel auszubilden, wobei jede Bahn (1, 2) einen Außenumfang aufweist und beide Außenumfänge miteinander verbunden oder versiegelt sind, um eine luft- oder gasdichte Kammer dazwischen zu definieren,
wobei beide Bahnen (1, 2) elastisch sind und eine der Bahnen (1) für einen definierten elektromagnetischen Strahlungsbereich durchlässig ist und die andere Bahn (2) im Wesentlichen eine reflektierende, spiegelartige Oberfläche aufweist, die für einen definierten elektromagnetischen Strahlungsbereich (8) reflektierend ist, und wobei Mittel zum Aufblasen oder Entleeren des Spiegels durch Anpassen des Drucks der Luft oder des Gases (5), die/das in der Kammer eingeschlossen ist,
vorgesehen sind, wobei die Mittel eine Vorrichtung zum Erzeugen eines definierten Drucks der Luft oder des Gases (5), die/das in der Kammer eingeschlossen ist und von der/dem eine Krümmung des Spiegels im Wesentlichen abhängt, umfasst,
und wobei ein Empfänger (10) an einem Brennpunkt oder einer Brennlinie des aufblasbaren Spiegels im Umgebungsbereich des aufblasbaren Spiegels angeordnet ist, um die elektromagnetische Strahlung (8) zu empfangen, die durch die reflektierende spiegelartige Oberfläche reflektiert wird,
**dadurch gekennzeichnet, dass** die Vorrichtung eine automatische Vorrichtung (72) zum Erzeugen eines definierten Überdrucks umfasst, der ein Differenzdruck zwischen dem atmosphärischen Druck und dem Druck der Luft oder des Gases ist, die/das in der Kammer eingeschlossen ist, und der innerhalb eines definierten Differenzdruckbereichs liegt,
und dass die automatische Vorrichtung durch einen automatischen Kompressor (72) ausgebildet ist, der einen Druckmesser, welcher den Druck des eingeschlossenen Gases misst, und einen weiteren Druckmesser enthält, welcher den atmosphärischen Luftdruck auf der Außenseite misst, und der entweder fortlaufend oder vorübergehend mit der Kammer in Verbindung steht, sodass der definierte Überdruck der Luft oder des Gases, die/das in der Kammer eingeschlossen ist, automatisch durch Aufblasen und Entleeren der Kammer erzeugt und beibehalten wird.

2. Kombination zum Umwandeln von elektromagnetischer Strahlung in eines von elektrischer Energie, Wärmeenergie und/oder chemischer Energie, die Kombination umfassend:
(a) den aufblasbaren, lichtkonzentrierenden Spiegel gemäß Anspruch 1, wobei der Empfänger (10) für die konzentrierte elektromagnetische Strahlung eine Vorrichtung für die Absorption und die Umwandlung der elektromagnetischen Strahlung in eines von elektrischer Energie, Wärmeenergie oder chemischer Energie umfasst.

3. Kombination nach Anspruch 2, ferner umfassend eine Empfängerstützstruktur zum Stützen des Empfängers (10) für die konzentrierte elektromagnetische Strahlung auf oder an der Stütze des aufblasbaren Spiegels oder in einem Bereich, der den aufblasbaren Spiegel umgibt.

4. Kombination nach Anspruch 3, wobei die Empfängerstützstruktur eine starre Empfängerstützstruktur ist, die derart auf der Stütze des aufblasbaren Spiegels befestigt ist, dass sich der Empfänger (10) am Brennpunkt oder an der Brennlinie des aufblasbaren Spiegels befindet.

5. Kombination nach Anspruch 3, wobei der Empfänger (10) für die konzentrierte elektromagnetische Strahlung derart bezüglich des aufblasbaren Spiegels mit einer einstellbaren Empfängerstützstruktur angebracht ist, dass er dem Weg des Brennpunkts oder der Brennlinie des aufblasbaren Spiegels in einem definierten Bereich folgen kann, wenn sich der Einfallswinkel von ankommender elektromagnetischer Strahlung bezüglich der optischen Achse oder der optischen Ebene des aufblasbaren Spiegels ändert.

6. Kombination nach Anspruch 3, wobei die Spiegelstützstruktur eine Anzahl von einfachen Stützsäulen umfasst, die derart im Wesentlichen mit ihren oberen Enden an der starren Stütze des aufblasbaren Spiegels und mit ihren unteren Enden an Fundamenten oder Befestigungspunkten auf dem Boden befestigt sind, dass die starre Stütze in der Nord-/Südrichtung einen definierten Parallelabstand zum Boden aufweist, oder dass sie eine definierte Neigung zum Boden hin aufweist.

7. Kombination nach Anspruch 6, wobei der aufblasbare Spiegel, die starre Stütze und die Spiegelstützstruktur die Grundstruktur eines Gebäudes ausbilden.

8. Kombination nach Anspruch 3, wobei die Spiegelstützstruktur derart am Boden angebracht ist, dass sie um eine vertikale Achse drehbar ist, und wobei die starre Stütze derart an dieser Spiegelstützstruktur angebracht ist, dass sie um eine horizontale Achse drehbar ist.

9. Kombination nach Anspruch 3, wobei die Spiegelstützstruktur eine Stützstruktur umfasst, die aus einer ersten und zweiten Einheit besteht, wobei sich die erste Einheit am südlichen Ende des aufblasbaren Spiegels befindet und sich die zweite Einheit am nördlichen Ende des aufblasbaren Spiegels befindet, und wobei der aufblasbare Spiegel derart mit zwei Drehgelenken drehbar an diesen separaten Einheiten befestigt ist, dass er um eine Drehachse kippbar ist, die in einer Nord-Süd-Richtung verlauft.

10. Kombination nach Anspruch 6, wobei die Empfängerstützstruktur eine einstellbare Empfängerstützstruktur umfasst, die im Wesentlichen aus einer gitterartigen Stützstruktur besteht, welche an den oberen Enden einer Anzahl von längen- und neigungseinstellbaren Stützsäulen befestigt ist, die am Boden befestigt sind, und wobei eine Anzahl von Empfängern für elektromagnetische Strahlung gitterartig an der Empfängerstützstruktur befestigt sind, wobei mehrere der aufblasbaren Spiegel im Wesentlichen permanent in einem gitterartigen Muster am Boden befestigt sind, und wobei die Befestigung der Empfänger am Boden derart hergestellt ist, dass die Empfänger automatisch in einem definierten Bereich gekippt werden können, um die Empfänger präzise zur elektromagnetischen Strahlung hin auszurichten, die von den mehreren aufblasbaren Spiegeln reflektiert wird.

11. Kombination nach Anspruch 3, wobei die Empfängerstützstruktur eine einstellbare Empfängerstützstruktur umfasst, die im Wesentlichen aus zwei längeneinstellbaren, säulenartigen Empfängerstützelementen besteht, die jedes ein Ende aufweisen, die entweder miteinander verbunden sind, um den Empfänger zu stützen, oder mit gegenüberliegenden Seiten des Empfängers.

12. Kombination nach Anspruch 6, wobei die Empfängerstützstruktur einen Geschäftsgebäudekran mit einer langen Spannweite oder eine kranartige Vorrichtung umfasst, und wobei der Empfänger derart an der Stützstruktur befestigt ist, dass er automatisch zu einer sich ändernden Position des Brennpunkts oder der Brennlinie des aufblasbaren Spiegels bewegt und zur korrekten Ausrichtung bezüglich des ankommenden Sonnenlichts, das durch den aufblasbaren Spiegel reflektiert wird, gekippt werden kann

13. Kombination nach Anspruch 3, ferner umfassend ein oder mehr zusätzliche strahlenbrechende oder reflektierende Elemente, die sich an definierten Positionen im optischen Weg der reflektierten Strahlung befinden, und wobei ein oder mehr zusätzliche Filter ebenfalls enthalten sein können, um das Lichtspektrum zu reduzieren, das am Empfänger ankommt.

14. Kombination nach Anspruch 3, ferner umfassend eine Windschutzbahn (73), die einen Außenumfang oder Rand aufweist, der mit der Bahn mit der reflektierenden Oberfläche oder der durchlässigen Bahn verbunden und versiegelt ist, um eine gasdichte Kammer zwischen der Windschutzbahn (73) und der Bahn mit der reflektierenden Oberfläche zu definieren, wobei die Windschutzbahn aus einer Folie gefertigt ist, die aus einem Polymermaterial hergestellt ist, das zusätzlich durch Fasern (beispielsweise Glasfasern) verstärkt sein kann.

15. Kombination nach Anspruch 3, wobei ein oder mehr rinnenartige Elemente (74) entweder am Außenrandbereich des aufblasbaren Spiegels oder an der starren Stütze des aufblasbaren Spiegels befestigt sind, um Regenwasser aufzufangen, das bei Regen von der durchlässigen Bahn des aufblasbaren Spiegels fließt.

16. Kombination nach Anspruch 3, wobei die Kombination auf einem Lastkraftwagen oder Anhänger vorgesehen ist, und wobei der aufblasbare Spiegel und seine Stützstruktur dazu konfiguriert sind, während der Überführung in einem entleerten, gefalteten oder auseinandergenommenen Zustand zu sein, wobei der aufblasbare Spiegel oder eine Gruppe von aufblasbaren Spiegeln im Gebrauch entweder von Hand oder automatisch mithilfe einer automatischen Kompressoreinheit und automatischen Antriebssystemen entfaltet oder zusammengebaut und aufgeblasen werden.

17. Kombination nach Anspruch 3, wobei die Kombination auf der Oberseite eines Versandbehälters, Luftfrachtbehälters oder jeglicher anderen Art von beweglichem Behälter vorgesehen ist, wobei der aufblasbare Spiegel und seine Stützstruktur dazu konfiguriert sind, während der Überführung innerhalb des Behälters in einem entleerten, gefalteten oder auseinandergenommenen Zustand zu sein, und wobei der aufblasbare Spiegel oder eine Gruppe von aufblasbaren Spiegeln und ihre Stützstrukturen im Gebrauch entweder von Hand oder automatisch mithilfe einer automatischen Kompressoreinheit und automatischen Antriebssystemen entfaltet oder zusammengebaut und aufgeblasen werden, um auf der Oberseite des Behälters bereitgestellt zu werden.

18. Gebrauch eines aufblasbaren Spiegels nach Anspruch 1 als schwebendes Solarkraftwerk, wobei der aufblasbare Spiegel mit einem Gas gefüllt ist, das leichter als Luft ist (beispielsweise Helium oder Wasserstoff), und wobei der aufblasbare Spiegel als ein Solarkraftwerk benutzt wird, das im Wesentlichen antriebslos in der hohen Atmosphäre schwebt.

## Revendications

1. Miroir gonflable concentrant la lumière comprenant deux feuilles (1, 2) sensiblement fabriquées d'une feuille polymère souple, ou fabriquées d'une feuille polymère souple qui est renforcée par des fibres et dans lequel les deux feuilles du miroir gonflable comprennent un matériau polymère résistant aux UV ou sensiblement résistant aux UV,
et les feuilles étant fixées à un support rigide, ou enveloppent un support rigide qui définit la périphérie extérieure du miroir gonflable, ledit support rigide étant fixé à une structure de support de miroir (7),
dans lequel les feuilles sont raccordées ou scellées l'une à l'autre afin de définir une chambre entre celles-ci qui est adaptée à être gonflée par de l'air ou du gaz (5) pour former le miroir gonflé, dans lequel chaque feuille (1, 2) présente une périphérie extérieure et les périphéries extérieures sont raccordées ou scellées ensemble l'une à l'autre afin de définir une chambre étanche à l'air ou aux gaz entre elles,
dans lequel les deux feuilles (1, 2) sont élastiques et l'une des feuilles (1) est transparente pour une plage définie de rayonnement électromagnétique et l'autre feuille (2) présente essentiellement une surface réfléchissante de type miroir qui est réfléchissante pour une plage définie de rayonnement électromagnétique (8), et
dans lequel des moyens sont prévus pour gonfler ou dégonfler le miroir en ajustant la pression de l'air ou du gaz (5) qui est enfermé dans la chambre, lesdits moyens comprenant un dispositif pour générer une pression définie dans l'air ou le gaz (5) qui est enfermé dans la chambre et sur lequel repose essentiellement une courbure du miroir,
et un récepteur (10) qui est agencé en un point focal ou sur une ligne focale du miroir gonflable dans la zone environnante du miroir gonflable pour recevoir le rayonnement électromagnétique (8) réfléchi par la surface réfléchissante de type miroir,
**caractérisé en ce que** ledit dispositif comprend un dispositif automatique (72) pour générer une surpression définie qui est une pression différentielle entre la pression atmosphérique et la pression de l'air ou du gaz enfermé dans la chambre, qui se trouve dans une plage de pression différentielle définie,
et ledit dispositif est formé d'une unité de compresseur automatique (72) comportant un manomètre qui mesure la pression du gaz enfermé et un autre manomètre qui mesure la pression de l'air atmosphérique extérieur et qui est soit constamment soit temporairement en communication avec la chambre de sorte que la surpression définie est générée automatiquement et maintenue dans l'air ou le gaz enfermé dans la chambre par gonflage et dégonflage de la chambre.

2. Ensemble pour transformer un rayonnement électromagnétique en une énergie électrique, une énergie thermique et/ou une énergie chimique, l'ensemble comprenant :
(a) le miroir gonflable concentrant la lumière selon la revendication 1, dans lequel le récepteur (10) pour le rayonnement électromagnétique concentré comprend un dispositif pour l'absorption et la transformation du rayonnement électromagnétique en une énergie électrique, thermique, chimique.

3. Ensemble selon la revendication 2, comprenant en outre une structure de support de récepteur pour supporter le récepteur (10) pour le rayonnement électromagnétique concentré sur ou le support du miroir gonflable ou dans la zone entourant le miroir gonflable.

4. Ensemble selon la revendication 3 dans lequel ladite structure de support de récepteur est une structure de support de récepteur rigide qui est fixée sur le support du miroir gonflable de sorte de que le récepteur (10) soit situé au point focal ou sur la ligne focale du miroir gonflable.

5. Ensemble selon la revendication 3 dans lequel le récepteur (10) pour le rayonnement électromagnétique concentré est monté par rapport au miroir gonflable avec une structure de récepteur réglable de telle sorte, qu'il peut suivre le chemin du point focal ou de la ligne focale du miroir gonflable dans une plage définie si l'angle d'incidence du rayonnement électromagnétique entrant change par rapport à l'axe optique ou au plan optique du miroir gonflable.

6. Ensemble selon la revendication 3 dans lequel ladite structure de support de miroir comprend un nombre de colonnes de support simples qui sont fixées essentiellement par leurs extrémités supérieures audit support rigide du miroir gonflable et par leurs extrémités inférieures aux fondations ou points de fixation au sol de telle sorte que le support rigide présente une distance parallèle définie au sol, ou a une inclinaison définie vers le sol, selon la direction nord-sud.

7. Ensemble selon la revendication 6 dans lequel le miroir gonflable, le support rigide et la structure de support de miroir forment la structure de base d'un bâtiment.

8. Ensemble selon la revendication 3 dans lequel ladite structure de support de miroir est montée dans le sol de telle sorte qu'elle peut tourner autour d'un axe de rotation vertical, et dans lequel ledit support rigide est monté sur cette structure de support de miroir de telle sorte qu'il peut tourner autour d'un axe de rotation horizontal.

9. Ensemble selon la revendication 3 dans lequel ladite structure de support de miroir comprend une structure de support, qui consiste en une première et une deuxième unités, la première unité étant disposée sur l'extrémité sud du miroir gonflable la deuxième unité étant disposée sur l'extrémité nord du miroir gonflable, et dans lequel le miroir gonflable est fixé en rotation à ces unités séparées par deux joints rotatifs, de telle sorte qu'il peut être incliné autour d'un axe de rotation, qui s'étend selon une direction nord-sud.

10. Ensemble selon la revendication 6 dans lequel ladite structure de support de récepteur comprend une structure de support de récepteur réglable, qui consiste essentiellement en une structure de support en forme de grille, qui est fixée aux extrémités supérieures d'un nombre de colonnes de support réglables en longueur et en inclinaison, qui sont fixées au sol, et dans lequel un nombre de récepteurs de rayonnement électromagnétique est fixé en forme de grille à la structure de support de récepteur, dans lequel une pluralité de miroir gonflable sont essentiellement fixés en permanence selon un motif en forme de grille au sol, et dans lequel la fixation des récepteurs sur la structure en forme de grille est réalisée de telle sorte que les récepteurs peuvent être orientés automatiquement selon une plage d'angle définie, dans le but d'orienter précisément les récepteurs vers le rayonnement électromagnétique réfléchi à partir de la pluralité de miroirs gonflables.

11. Ensemble selon la revendication 3 dans lequel ladite structure de support de récepteur comprend une structure de support de récepteur réglable consistant essentiellement en deux éléments de support de récepteur en forme de colonne réglable en longueur, ayant chacun une extrémité qui est soit reliée l'une à l'autre pour supporter le récepteur ou à des côtés opposés du récepteur.

12. Ensemble selon la revendication 6 dans lequel ladite structure de support de récepteur comprend une flèche de construction commerciale avec une longue portée ou un dispositif en forme de flèche, et dans lequel le récepteur est fixé à cette structure de support de telle manière, qu'il peut être automatiquement déplacé dans une position changeante du point focal ou de la ligne focale du miroir gonflable et orienté selon l'orientation correcte par rapport à la lumière du soleil entrante qui est réfléchie par le miroir gonflable.

13. Ensemble selon la revendication 3 comprenant en outre un ou plusieurs éléments réfractifs ou réflecteurs supplémentaires, qui sont disposés en des positions définies sur le chemin optique du rayonnement réfléchi, et dans lequel un ou plusieurs filtres optiques supplémentaires peut aussi être inclus de sorte de restreindre le spectre lumineux qui arrive sur le récepteur.

14. Ensemble selon la revendication 3 comprenant en outre une feuille anti-vent (73), qui présente une périphérie extérieure ou un bord qui est raccordé ou scellé à la feuille dotée de la surface réfléchissante ou de la feuille transparente, de manière de définir a une chambre étanche au gaz entre la feuille anti-vent (73) et la feuille dotée de la surface réfléchissante, la feuille anti-vent étant fabriquée à partie d'une feuille formée d'un matériau polymère, qui peut en outre être renforcé par des fibres (par exemple par des fibres de verre).

15. Ensemble selon la revendication 3 dans lequel un ou plusieurs des éléments en forme de gouttière (74) sont soit fixés sur une zone de bord extérieur du miroir gonflable ou sur le support rigide du miroir gonflable, pour capter l'eau de pluie qui s'écoule depuis la feuille transparente du miroir gonflable pendant les pluies.

16. Ensemble selon la revendication 3, dans lequel l'ensemble est prévu sur un camion ou une remorque, et dans lequel le miroir gonflable et sa structure de support sont configurés pour être dégonflés, repliés ou désassemblés durant le transport, dans lequel en utilisation, le miroir gonflable ou un groupe de miroirs gonflables est déplié ou assemblé et gonflé, soit manuellement soit automatiquement à l'aide d'une unité de compresseur automatique et de systèmes automatique d'entraînement.

17. Ensemble selon la revendication 3, dans lequel l'ensemble est prévu sur le dessus d'un conteneur d'expédition, d'un conteneur de fret aérien ou de tout autre type de conteneur mobile, dans lequel le miroir gonflable et sa structure de support sont configurés pour être dégonflés, repliés ou désassemblés durant le transport à l'intérieur du conteneur, et dans lequel en utilisation, le miroir gonflable ou un groupe de miroirs gonflables et leurs structures de supports sont dépliés ou assemblés et gonflés, soit manuellement soit automatiquement à l'aide d'une unité de compresseur automatique et de systèmes automatiques d'entraînement, de manière à être prévu sur la face supérieure du conteneur.

18. Utilisation d'un miroir gonflable selon la revendication 1 en tant que centrale solaire flottante, dans lequel le miroir gonflable est rempli d'un gaz plus léger que l'air (par exemple l'hélium ou l'hydrogène) et dans lequel le miroir gonflage est utilisé comme centrale à énergie solaire qui flotte essentiellement de manière non alimentée dans la haute atmosphère.
